# DEMANDE DE BREVET EUROPEEN

(11) **EP 0 614 791 A1**
(43) Date de publication de la demande: **14.09.1994**
(21) Numéro de dépôt: 94400494.4
(22) Date de dépôt: 08.03.1994
(51) Int. Cl.: B60R 25/04, B60R 25/00, E05B 49/00

(54) **Dispositif antivol pour voiture automobile**

(30) Priorité: 09.03.1993 FR 9302697; 09.03.1993 FR 9302696; 09.03.1993 FR 9302698; 25.05.1993 FR 9306216
(71) Demandeur: THOMSON-CSF, 75008 Paris (FR)
(72) Inventeur: Avignon, Bruno, F-92402 Courbevoie Cedex (FR); Barre, Charles, F-92402 Courbevoie Cedex (FR); Bois, Arnaud, F-92402 Courbevoie Cedex (FR); Canal, Yves, F-92402 Courbevoie Cedex (FR); Maigrot, Claude, F-92402 Courbevoie Cedex (FR); Tessier, Gérard, F-92402 Courbevoie Cedex (FR)
(74) Mandataire: Chaverneff, Vladimir

(57) **Abrégé**

Le dispositif antivol de l'invention comporte un moyen de production de code confidentiel (14, 15) comprenant un dispositif d'émission (16) et au moins un module récepteur actif (19, 20) disposé par l'utilisateur en un endroit déterminé arbitrairement par lui-même, le moyen de production de code et chaque module étant reliés au réseau électrique existant de la voiture (2), chaque module comportant des moyens (29 à 32) permettant de reconnaître la validité du code émis par les moyens de production de code et transmis par l'intermédiaire du réseau électrique (2), et des moyens d'action sur un élément essentiel de la voiture.

## Description

La présente invention se rapporte à un dispositif antivol pour voiture automobile.

Les dispositifs antivols actuellement utilisés pour les voitures automobiles sont soit des dispositifs mécaniques bloquant généralement le volant de direction, soit des dispositifs avertisseurs sonores (actionnant éventuellement également les phares du véhicule).

Les dispositifs mécaniques sont faciles à forcer par un spécialiste, sans que cela endommage sérieusement le véhicule, qui peut être revendu frauduleusement avec un bénéfice élevé (la réparation du dispositif de blocage de la colonne de direction est facile et peu onéreuse). Les dispositifs avertisseurs peuvent être rapidement désactivés par un spécialiste, et de toute façon leur actionnement n'attire pratiquement plus l'attention des passants, car ils se déclenchent souvent sans qu'il y ait effraction, par exemple à la suite du choc d'un autre véhicule se garant devant ou derrière le véhicule équipé d'avertisseur.

La présente invention a pour objet un dispositif antivol pour voiture automobile, facile à installer, en particulier sur une voiture déjà mise en service, qui soit peu onéreux, et qui soit suffisamment dissuasif pour décourager les voleurs dans la plupart des cas.

La présente invention a également pour objet un dispositif de fermeture à clé et serrure pour ledit dispositif antivol, qu'un malfaiteur ne puisse ouvrir, même s'il dispose de la copie de la clé et de la serrure.

La présente invention a également pour objet un procédé de dissuasion de vol de véhicule suffisamment efficace pour décourager la plupart des voleurs, sans causer de dégâts significatifs au véhicule.

Le dispositif antivol conforme à l'invention comporte un moyen de production de code confidentiel comprenant un dispositif d'émission, et plusieurs modules récepteurs actifs disposés par l'utilisateur en un endroit déterminé arbitrairement par lui-même, le moyen de production de code et chaque module étant reliés au réseau électrique existant de la voiture, chaque module comportant des moyens permettant de reconnaître la validité du code émis par les moyens de production de code et transmis par l'intermédiaire du réseau électrique, et des moyens d'action sur un élément essentiel de la voiture.

De façon avantageuse, le dispositif antivol comporte un module agissant sur des moyens verrouillant le capot moteur, à l'aide d'au moins un crochet dont le point d'accrochage au capot est éloigné des bords de ce capot. De façon avantageuse, le dispositif antivol comporte au moins un module commandant la coupure d'une liaison électrique essentielle de la voiture.

Le dispositif antivol conforme à l'invention comporte au moins un dispositif de clé électronique comprenant une mémoire reprogrammable, un contact de connexion, un dispositif émetteur-récepteur, un codeur, un décodeur et une mémoire temporaire, ce dispositif de clé coopérant avec un dispositif réceptacle comprenant un contact de connexion approprié à celui de la clé et relié à un réseau de transmission auquel sont reliés un module maître de supervision et au moins un module satellite actif, chaque module comportant au moins une mémoire reprogrammable, un récepteur et décodeur, un codeur et émetteur, au moins un comparateur, le module maître comportant en outre des moyens de calcul de nouveau code, mémorisé dans toutes les mémoires reprogrammables, les modules actifs comportant en outre un dispositif d'actionnement.

Le dispositif conforme à l'invention comporte un moyen de détection d'effraction, et au moins un module actif disposé par l'utilisateur en un endroit déterminé arbitrairement par lui-même, chaque module comportant des moyens actifs exerçant une action de blocage et/ou de destruction sur au moins un élément électrique et/ou mécanique essentiel de la voiture.

De façon avantageuse, le dispositif de l'invention comporte un module agissant sur des moyens verrouillant le capot moteur, à l'aide d'au moins un crochet dont le point d'accrochage au capot est éloigné des bords de ce capot. De façon avantageuse, le dispositif de l'invention comporte au moins l'un des modules suivants: un module commandant la coupure d'une liaison électrique essentielle de la voiture, un module commandant le blocage d'un élément mécanique essentiel de la voiture, un module commandant la coupure d'une liaison mécanique essentielle de la voiture, un module commandant le blocage et/ou le noyage du moteur, un module commandant le blocage d'une conduite essentielle du véhicule.

Selon le procédé de l'invention, appliqué à un véhicule comportant un moyen de détection d'effraction, et au moins un module actif disposé par l'utilisateur en un endroit déterminé arbitrairement par lui-même, chaque module comportant des moyens actifs exerçant une action de blocage et/ou de destruction sur au moins un élément électrique et/ou mécanique essentiel de la voiture, les modules actifs exercent une action dont l'importance est fonction de la gravité de l'effraction.

S'il s'agit d'une effraction simple, les moyens actifs coupent une liaison électrique (fusible, conducteur de liaison, faisceau d'allumage) ou une liaison mécanique (câble ou tringlerie d'accélérateur, ou d'embrayage...) facile à réparer. S'il s'agit d'une effraction grave, les moyens actifs bloquent ou détruisent au moins partiellement un élément essentiel du véhicule dans une mesure telle que la réparation ou le déblocage de cet élément nécessite un matériel important et dure un temps suffisamment long pour décourager dans la plupart des cas le voleur. Dans le cas de destructions d'éléments de la voiture, la dépréciation qui en résulte peut être un moyen suffisamment dissuasif pour éviter son vol, l'immobilisation du véhicule étant également un élément dissuasif, d'autant plus que la recherche des éléments bloqués ou coupés peut être très longue. De façon avantageuse au moins une action des moyens actifs est retardée et se produit de préférence lors d'un arrêt momentané du véhicule après un éventuel démarrage réussi.

Selon un autre aspect du procédé conforme à la présente invention, aussitôt après avoir détecté une tentative de vol, on coupe une liaison électrique ou mécanique essentielle du véhicule, puis on détecte une tentative de recherche de la coupure ainsi provoquée, on commande, dans l'affirmative le blocage d'arrivée de carburant et/ou une indication erronée de niveau de carburant du véhicule.

Le dispositif antivol conforme à l'invention comporte un moyen de production de code confidentiel comprenant un dispositif d'émission, et au moins un premier module récepteur actif disposé par l'utilisateur en un endroit déterminé arbitrairement par lui-même, ce premier module comportant des moyens produisant la coupure d'une liaison électrique ou mécanique essentielle du véhicule, au moins un second module récepteur comportant des moyens de blocage du circuit de carburant du véhicule et, de préférence, des moyens faussant l'indication de niveau du carburant, le dispositif comportant en outre des moyens de détection d'intrusion illégale dans le véhicule et des moyens de détection d'effraction d'un élément du véhicule autre que ses portières, le moyen de production de code et chaque module étant reliés au réseau électrique existant du véhicule, chaque module comportant des moyens permettant de reconnaître la validité du code émis par les moyens de production de code et transmis par l'intermédiaire du réseau électrique.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'un dispositif antivol conforme à l'invention,
- la figure 2 est un bloc-diagramme d'un module du dispositif de la figure 1.
- la figure 3 est un bloc-diagramme simplifié d'un dispositif de fermeture incorporant un dispositif de clé de sécurité conforme à l'invention ;
- la figure 4 est un bloc-diagramme de la clé électronique du dispositif de la figure 3 ;
- les figures 5 et 6 sont respectivement un bloc-diagramme de la serrure maître du dispositif de la figure 3; et un bloc-diagramme du générateur de codes de cette serrure maître,
- la figure 7 est un bloc-diagramme d'une serrure satellite du dispositif de la figure 3 ;
- les figures 8 à 11 sont respectivement des organigrammes du fonctionnement de la serrure maître, d'une serrure satellite à action de coupure seule, et d'une serrure satellite à action destructrice, conformément à l'invention ;
- la figure 12 est une vue schématique d'un moteur à injection d'essence, montrant différents accès à des conduites d'admission en vue du blocage de ce moteur ;
- les figures 13 à 16 sont des vues en coupe de différents modes de réalisation de dispositifs actifs du dispositif de la figure 1 ;
- la figure 17 est un bloc-diagramme d'un dispositif de dissuasion conforme à l'invention,
- la figure 18 est un bloc-diagramme d'un module actif du dispositif de la figure 17 déclenché par une tentative de vol simple, et
- la figure 19 est un bloc-diagramme d'un module actif du dispositif de la figure 17, déclenché par une tentative de vol résolue.

L'invention est décrite ci-dessous en référence à une voiture automobile, mais il est bien entendu qu'elle n'est pas limitée à une telle application et qu'elle peut être mise en oeuvre dans d'autres véhicules.

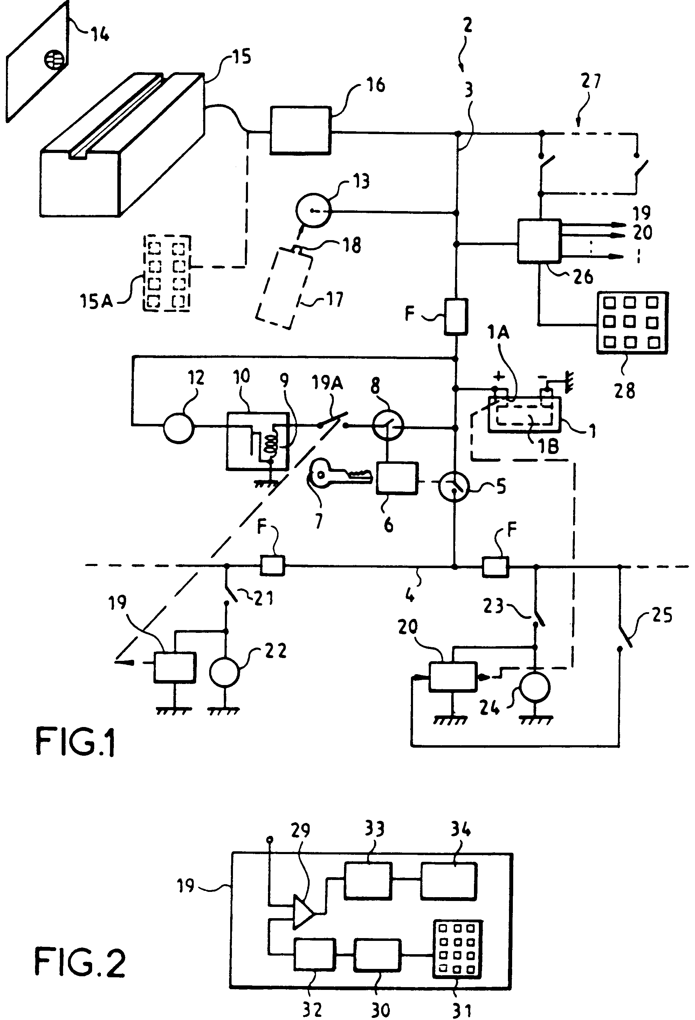

Sur la figure 1 on a schématiquement représenté les éléments électriques de la voiture dont se sert le dispositif de l'invention. Sur cette figure, on a référencé 1 la batterie de la voiture. Cette batterie est reliée au réseau électrique 2. Ce réseau 2 comprend habituellement un ou plusieurs conducteurs 3 constamment galvaniquement reliés à la batterie 2 et plusieurs conducteurs 4 reliés à la batterie via un contacteur principal 5 commandé par un dispositif mécanique "antivol" classique 6, lui-même commandé par une clé mécanique classique 7. Le dispositif 6 commande également un contacteur de démarrage 8 reliant l'enroulement d'excitation 9 d'un relais de démarrage 10 à la batterie 1. Un contact 11 du relais 10 permet d'alimenter le démarreur 12 par la batterie 1. Des fusibles F relient généralement le conducteur 3 à la batterie et les conducteurs 4 au contacteur 5. Généralement, une prise 13 d'allume-cigares est reliée au conducteur 3.

On va décrire maintenant les éléments de l'invention qui sont reliés au réseau 2. Le dispositif antivol de l'invention met en oeuvre un dispositif de production de code, qui est dans le cas présent une "clé", différente de la clé habituelle 7. Le réceptacle de cette "clé" est un élément distinct du (ou des) dispositif(s) faisant office de serrure (modules actifs décrits ci-dessous). En outre la "serrure" utilisée est différente des serrures classiques, telles que les serrures de portières et la serrure 6 coopérant avec la clé 7. Cette "serrure" comporte en fait plusieurs modules actifs décrits ci-dessous, répartis dans la voiture et exerçant soit une action mécanique de blocage (blocage de la colonne de direction ou des éléments qui lui sont reliés, dans le compartiment moteur, blocage des pédales, des freins,...) soit une action de coupure électrique, et ce de façon discrète et difficilement détectable.

La "clé" de l'invention est un dispositif pouvant mémoriser au moins un code confidentiel. Comme illustré sur le dessin, cette clé est en fait une carte à puce 14 ("Smart Card" en anglais) d'un type couramment utilisé pour les opérations bancaires ou pour les décodeurs de télévision à péage. En variante, la carte 14 peut être une simple carte à bande magnétique imprimée sur une de ses faces. Cette carte 14 coopère avec un lecteur 15 approprié, fixé par exemple sur le tableau de bord de la voiture. Le lecteur 15 est relié via un dispositif d'émission 16 au conducteur 3. Le dispositif 16 est un modulateur dont la fréquence porteuse, avantageusement de quelques MHz (par exemple de 1 à 10 MHz), est modulée par les signaux basse fréquence issus du lecteur 15. La réalisation d'un tel modulateur est évidente pour l'homme de l'art, et ne sera pas décrite ici. Selon une variante, représentée en traits interrompus, on remplace les éléments 14 et 15 par un clavier 15A relié au modulateur 16.

En variante, comme représenté en traits interrompus sur la figure 1, le réceptacle est constitué par la prise d'allume-cigares 13 de la voiture. Dans ce cas, la "clé" se présente sous forme d'un élément cylindrique 17 muni d'un embout 18 adapté à la prise 13, et elle contient un dispositif de mémorisation programmable similaire à celui d'une carte à puce, ou simplement une mémoire morte ou une mémoire électriquement reprogrammable, et un dispositif modulateur similaire au dispositif 16.

Le propriétaire de la voiture relie à la ligne 4, et/ou à la ligne 3, un ou de préférence plusieurs modules "actifs", à n'importe quel endroit de l'une de ces lignes. De façon avantageuse, ces modules sont reliés en aval d'interrupteurs mettant en marche des appareillages que l'on met rarement en marche au moment du démarrage du véhicule, par exemple des feux de route, des feux antibrouillard, la ventilation, ce qui permet de personnaliser l'installation en n'autorisant le démarrage que si l'interrupteur correspondant est fermé. Bien entendu, si l'on veut que des modules actifs soient reliés en permanence à l'accumulateur 1, ou si l'on veut pouvoir les activer avant de fermer le contact principal 5, il faut les relier en amont de ce contact principal, sur la ligne 3.

On a représenté sur le dessin deux tels modules, référencés 19 et 20. Le module 19 est branché en aval de l'interrupteur 21 mettant en marche les feux de détresse 22 (appelés aussi "Warning"). Le module 20 est branché en aval de l'interrupteur 23 mettant en marche le ventilateur 24 d'aération de la voiture. Le module 19 agit par exemple sur un interrupteur 19A placé entre le contact 8 et le relais 10. En variante, le module 19 (ou n'importe quel autre module actif) est inséré en série sur un conducteur alimentant un organe essentiel, et joue le rôle d'un interrupteur qui ne se ferme pas en cas d'effraction. Ce module peut par exemple être inséré à la place de l'interrupteur 19A, et est alors ouvert à l'arrêt du véhicule. Le module 20 commande par exemple la destruction d'un fusible 1A inséré entre les plaques de plomb 1B et une borne de connexion (par exemple la borne +) de l'accumulateur 1. Pour compliquer la détection de ces branchements, on peut disposer sur la planche de bord un ou plusieurs interrupteurs de leurrage qui soit ne sont électriquement reliés à rien, soit dont les deux bornes sont reliées au même conducteur 4, soit des interrupteurs commandant directement l'activation d'au moins un module, comme c'est le cas pour l'interrupteur 25 qui commande le module 20. D'autres branchements des modules actifs sont évidemment possibles, par exemple sur l'une des bornes fixes d'un commutateur à plusieurs positions, ou sur des claviers de codage nécessitant de former un code confidentiel, ...

De façon avantageuse, on branche sur le conducteur 3 un dispositif de temporisation 26 mis en marche par l'ouverture d'au moins l'une des portières de la voiture (par l'un des interrupteurs 27 commandés par l'ouverture des portières). Le dispositif 26 est désactivé par un code que l'on doit former sur un clavier 28. Si la temporisation du dispositif 26, de durée réglable, est écoulée avant que le bon code ne soit formé sur le clavier 28, ce dispositif 26 active au moins l'un des modules 19, 20 .. Bien entendu, le dispositif 26 est disposé dans un endroit discret et auquel on ne peut pas accéder rapidement, par exemple dans le compartiment moteur, ce qui est avantageux lorsque, comme décrit ci-dessous, le capot de ce compartiment est verrouillé conformément à une caractéristique de l'invention. Le clavier 28 peut être remplacé par tout dispositif équivalent, le lecteur 15, coopérant avec la carte 14 pouvant en tenir lieu par exemple. Il est également bien entendu que le dispositif 26 peut être relié à des fils-leurres. Ce dispositif de temporisation permet également de fixer un temps minimum après un essai infructueux, avant de pouvoir essayer un autre code, et permet également de limiter (par exemple à cinq ou six) le nombre d'essais infructueux avant d'inhiber tout autre essai et/ou d'agir sur un module actif.

On a représenté en figure 2 le bloc-diagramme d'un des modules actifs, par exemple le module 19. Ce module actif comporte un dispositif comparateur 29 relié à l'entrée du module et à un dispositif de codage interne 30. Ce dispositif de codage est associé à un dispositif de formation de code 31, par exemple du type à roues codeuses ou à micro-interrupteurs, et il est programmé par le propriétaire de la voiture pour mémoriser dans une mémoire 32 du dispositif de codage le code qu'il a choisi. La sortie du comparateur 29 est reliée à un dispositif déclencheur 33 commandant un dispositif actif 34.

Lorsqu'un code émis par le dispositif 16, lors de la lecture de la carte 14, arrive au comparateur 29, l'interrupteur de sécurité (21, 23, ...) étant fermé, le comparateur 29 le compare au code mémorisé dans la mémoire 32. Si le code émis est le bon, le signal "bon" transmis par le comparateur 29 au déclencheur 33 n'active pas celui-ci, et rien ne se passe. Dans le cas contraire, le déclencheur 33 commande le dispositif 34.

Le dispositif 34 a en général une action de blocage ou de destruction d'éléments essentiels de la voiture. Bien entendu, lorsqu'il s'agit d'action destructrice, les destructions sont limitées, leur objectif étant soit de décourager un voleur pressé à cause de la longue durée de la recherche des pannes provoquées et/ou des réparations nécessitées par suite de ces destructions, soit de la faire renoncer à son projet par suite de la dépréciation de la voiture due à l'ouverture forcée du capot moteur (qui abîme irrémédiablement ce capot et même les ailes ou d'autres éléments, sur lesquels prendrait appui un levier), ou due au noyage du moteur, ...

Les modules actifs peuvent produire une action de type électrique: coupure d'une liaison électrique (telle que le fusible 1A de l'accumulateur 1) ou court-circuit d'un élément électrique essentiel au démarrage et au déplacement de la voiture, par exemple coupure (par ouverture d'un interrupteur ou d'un relais, ou insertion d'une résistance de valeur très élevée, ou fusion d'un fusible en série avec un élément que l'on court-circuite), d'une liaison électrique de la bobine d'allumage ou la bobine d'excitation du démarreur.

Le dispositif de l'invention est facile à installer sur une voiture déjà en service: on se sert, en tant que moyen de transmission du code de mise en route, du réseau électrique existant. On branche sur ce réseau un dispositif émetteur (dispositif 17 ne nécessitant aucune adjonction de fils, ou dispositifs 15 ou 15A et 16 à branchement très simple) et plusieurs modules actifs récepteurs dont le branchement est également très simple (en un endroit quelconque du réseau électrique de la voiture) et qui agissent discrètement sur des dispositifs faciles à insérer (interrupteurs tels que 19A ou fusibles en série avec des organes vitaux). La personnalisation en est donc également très simple (choix personnel des liaisons à couper, emplacement des modules récepteurs ...). On obtient ainsi une "serrure" répartie en plusieurs sites. La multiplicité de ces sites et leur personnalisation retardent longuement ou empêchent le démarrage non autorisé du véhicule, et découragent la plupart des voleurs.

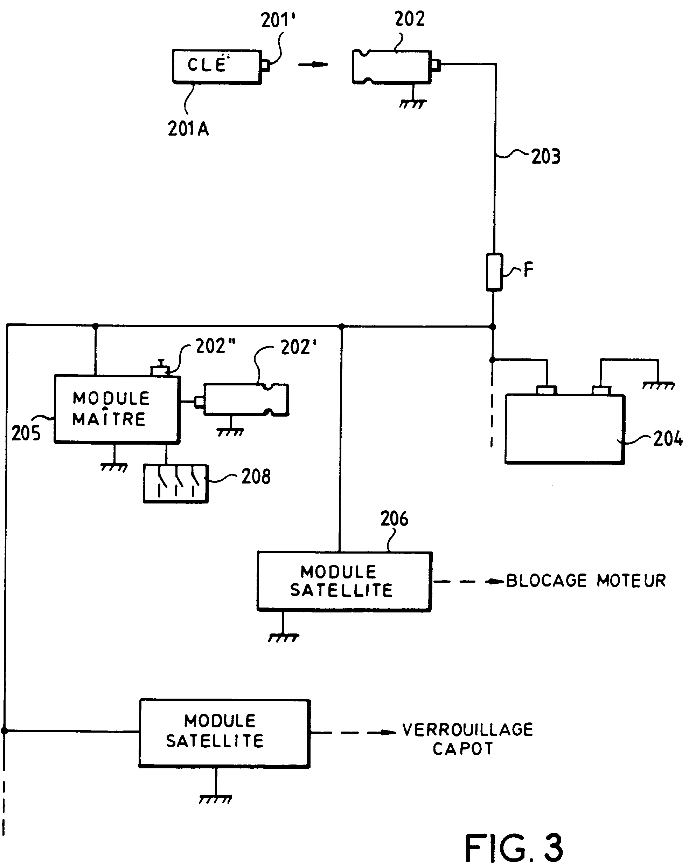

Le dispositif de fermeture schématiquement représenté en figure 3 comporte essentiellement une clé 201A électronique (faisant partie d'un jeu de clés 201A, 201B, 201C... comportant les mêmes éléments, seul le contenu de leur mémoire étant différent, ceci afin d'éviter, en cas de perte de l'une des clés qu'un voleur puisse s'en servir, comme expliqué ci-dessous). Cette clé coopère avec un réceptacle 202, relié, via un fusible F au réseau existant 203 de conducteurs électriques du véhicule qui sont reliés en permanence à la batterie 204 du véhicule. Le réceptacle 202 est avantageusement l'embase de l'allume-cigares du véhicule. Bien entendu, la clé mécanique habituelle dite "d'antivol" et servant à actionner le démarreur du véhicule peut subsister. L'extrémité antérieure 201' de la clé 201A est conformée de façon à s'adapter à la borne positive du réceptacle 202. Selon une variante avantageuse, le réceptacle 202 est précédé d'un dispositif faisant office de "filtrage mécanique", par exemple un canon à profil spécial coopérant avec des "dents" correspondantes disposées sur le corps de la clé 201A, ceci surtout afin d'éviter au conducteur habituel du véhicule d'introduire dans le réceptacle 202 une clé ne correspondant pas au véhicule, et d'autre part pour caractériser une effraction délibérée d'un malfaiteur en l'obligeant à détruire au moins partiellement ce dispositif de filtrage qui n'est pas nécessairement très résistant ni complexe. La réalisation d'un tel dispositif de filtrage mécanique est évidente pour l'homme du métier et ne sera pas décrite plus en détail. Bien entendu, dans d'autres applications, pour lesquelles on ne dispose pas d'un réseau existant de conducteurs électriques, on met en place un réseau de transmission, qui peut être à conducteurs électriques, à fibres optiques, ou radioélectrique.

On relie au réseau 203 un module maître 205, et par exemple au moins deux modules 206, 207,. Ces modules 206, 207 ... sont dits satellites et sont décrits en détail ci-dessous.

Le module maître 205, qui a un rôle de supervision du dispositif de fermeture et un rôle de reprogrammation des modules satellites et de toutes les clés 201A, 201B, 201C, ... coopère avec un dispositif 208 de personnalisation (qui peut en être distinct ou lui être intégré). Le dispositif 208 de personnalisation, qui n'est pas nécessairement utilisé, comporte un ou plusieurs interrupteurs ou dispositifs analogues accessibles à l'utilisateur. On relie, par exemple directement au module 205 un réceptacle 202' similaire au réceptacle 202, et un boîtier de commande 202'' mettant en service ce réceptacle 202'. Le réceptacle 202' sert, comme expliqué plus en détail ci-dessous, à la programmation d'une nouvelle clé de secours.

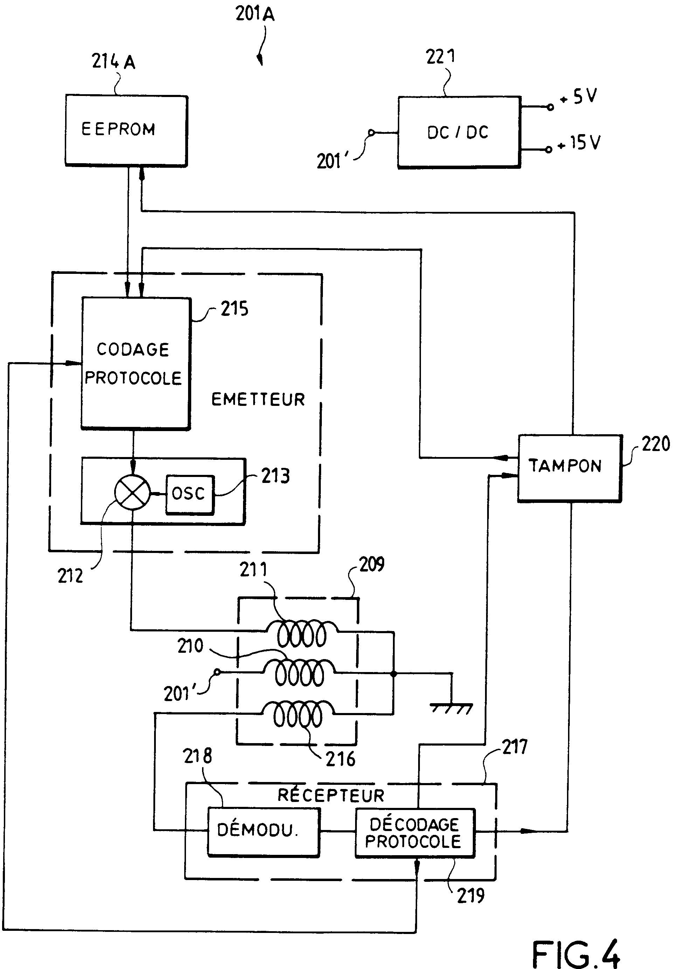

On a représenté en figure 4 le bloc-diagramme de l'une des clés, par exemple de la clé 201A (toutes les clés ont un schéma identique). La clé 201A comporte un transformateur 209 dont un enroulement 210 est relié entre la masse et le pôle positif de la batterie. Une borne d'un autre enroulement 211 du transformateur 209 est reliée à la masse et l'autre à la sortie d'un modulateur 212. L'une des entrées (de signal porteur) du modulateur 212 est reliée à la sortie d'un oscillateur 213. Bien entendu, aussi bien dans le cas de la clé que dans le cas des modules décrits ci-dessous, le couplage au réseau électrique ne se fait pas nécessairement par transformateur, d'autres couplages pouvant être utilisés (couplage direct, par condensateur, résistance ...). Une mémoire 214A électriquement effaçable (type EEPROM par exemple) est reliée via un dispositif 215 de codage à l'entrée de signal modulant du modulateur 212. La fréquence de l'oscillateur 213 est par exemple de quelques MHz. Le transformateur 209 comporte un troisième enroulement 216 dont une borne est reliée à la masse et l'autre à l'entrée d'un récepteur 217 comportant essentiellement un démodulateur 18 suivi d'un décodeur 219. Le décodeur 219 est d'un type approprié au protocole de transmission utilisé par le module maître 205. La sortie du décodeur 219 est reliée via une mémoire temporaire 220 à la mémoire 214A. Le décodeur 219 est relié à l'entrée de validation de la mémoire 220 (afin de valider la transmission du code contenu dans cette mémoire vers la mémoire 214A lorsque le module maître s'est assuré que ce code est le bon). L'entrée de lecture de la mémoire 220 est reliée au codeur 215 (afin d'envoyer au module maître, en tant qu'accusé de réception, le nouveau code reçu de ce module maître pour que ce dernier le compare au nouveau code qu'il vient de générer). La clé 201A comporte également un convertisseur continu/continu 221 fournissant, à partir de la tension délivrée par la batterie 204 (généralement 12 V.), les tensions d'alimentation nécessitées par les circuits que renferme cette clé ( généralement des tensions de 5V. et 15 ou 21 V. ).

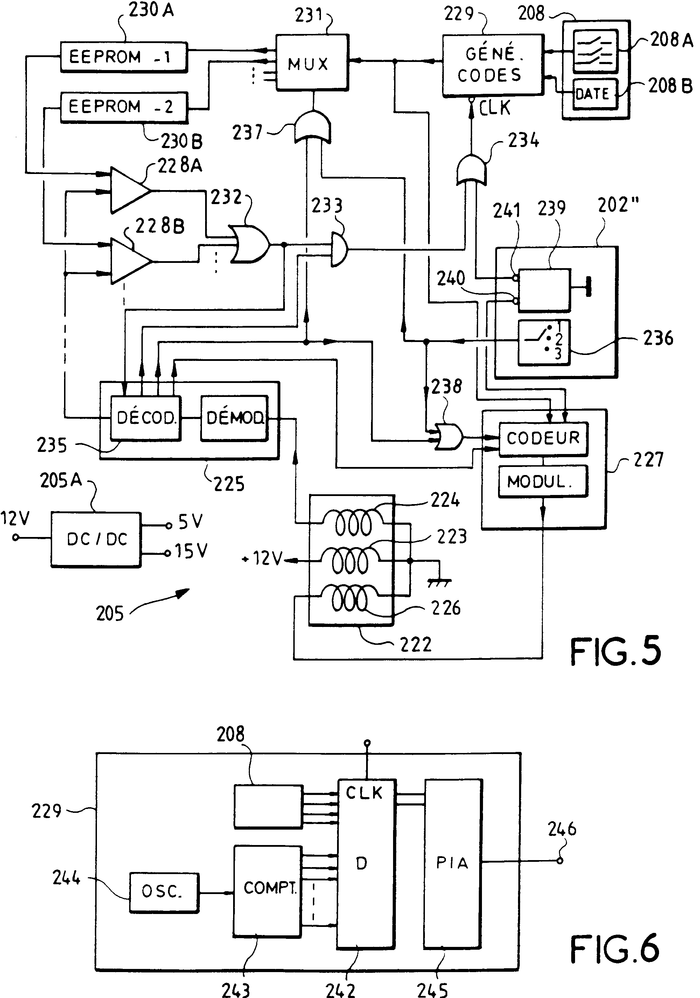

On a représenté en figure 5 le bloc-diagramme du module maître 205. Ce module comporte un transformateur 222 à trois enroulements. Un enroulement 223 de ce transformateur est relié entre la masse et le réseau 203. Une borne du deuxième enroulement 224 du transformateur 222 est reliée à la masse, et son autre borne à une entrée d'un dispositif 225 récepteur et de reconnaissance de codes. Un troisième enroulement 226 du transformateur 222 est relié entre la masse et la sortie d'un émetteur 227 qui comporte un codeur (non représenté), mettant en oeuvre un protocole de transmission à accusé de réception, par exemple le protocole TCPIP. Cet émetteur 227 comporte en outre, comme les clés 201A, 201 B ... un oscillateur local et un modulateur (non représentés). La sortie du récepteur 225 est reliée à une première entrée de plusieurs comparateurs 228A, 228B, ... Le module 205 comporte également un générateur de codes 229, décrit ci-dessous en référence à la figure 6. Le générateur 229 est relié à l'émetteur 227, à plusieurs mémoires de codes 230A, 230B, ... via un multiplexeur 231, et au dispositif 208 de personnalisation. Les mémoires 230A, 230B,... sont reliées à la deuxième entrée des comparateurs 228A, 228B, ... respectivement. Les sorties des comparateurs 228A, 228B, ... sont reliées à l'entrée d'horloge CLK du générateur 229 via un circuit OU référencé 232 suivi d'une porte ET 233 et d'un circuit OU 234. La deuxième entrée de la porte ET 233 est reliée à une sortie de validation 235 du décodeur du récepteur 225 (sortie validation active lorsque le module maître et tous les modules satellites ont reconnu le code de la clé venant d'être introduite dans le réceptacle 202 comme valable). La sortie de la porte OU 232 est reliée au décodeur du récepteur 225 (pour lui signaler que, de son côté, le module maître a reconnu le code de la clé comme bon). Le réceptacle 202' de reprogrammation de clé est disposé dans un endroit qui ne peut être accessible qu'après utilisation d'une clé reconnue bonne, de préférence sur le module maître ou à proximité de celui-ci, dans le compartiment moteur. L'accès à ce compartiment est protégé par son capot qui est verrouillé grâce à un dispositif de blocage commandé par un module satellite (207) et fixé d'une part au châssis, et d'autre part à la face intérieure de ce capot, près de son centre. Ainsi, un voleur ne disposant pas de la bonne clé est obligé de forcer le capot, ce qui active un capteur d'effraction caractérisée, et déclenche une action d'immobilisation ou de destruction d'un élément mécanique et/ou électrique essentiel de la voiture. Le réceptacle 202' est relié au réseau électrique 203 de la voiture. A proximité de ce réceptacle, de préférence sur le module maître, on dispose un boîtier de commande 202''. Ce boîtier de commande 202'' comporte un circuit 236, par exemple à micro-interrupteurs, permettant à l'utilisateur de former le numéro de la nouvelle clé à programmer (à la place de la clé détruite ou perdue ou volée). Le circuit 236 est relié à un circuit OU 237 dont la sortie est reliée à l'entrée de commande du multiplexeur 231, et à un autre circuit OU 238 dont la sortie est reliée au codeur de l'émetteur 227. La sortie de décodage de numéros de clés du décodeur du récepteur 225 est reliée à la deuxième entrée de la porte OU 237 et à la deuxième entrée de la porte OU 238. Le boîtier de commande 220'' comporte également un circuit 239 produisant sur une sortie 240 un ordre de mise à l'écoute, par tous les modules satellites, uniquement des messages provenant du module maître, et produisant sur une sortie 241 une impulsion d'horloge. Cette sortie 241 est reliée à la deuxième entrée de la porte OU 234. La sortie 240 est reliée au codeur de l'émetteur 227. Le module maître 205 comporte également un convertisseur continu/continu 205A similaire au convertisseur 221 des clés 201A, 201B, ....

On a représenté en figure 6 le bloc-diagramme d'un exemple de réalisation du générateur 229. Ce générateur comporte un registre 242 à bascules D. Une partie des entrées du registre 242 est reliée au dispositif 208 de personnalisation, et l'autre aux sorties parallèles d'un compteur 243 dont l'entrée est reliée à un oscillateur 244. Les sorties du registre 242 sont reliées par un sérialiseur (P.I.A.) 245 à la sortie 246 du générateur 229, qui est reliée à l'émetteur 227 et au multiplexeur 231. Le dispositif de personnalisation 208, généralement utilisé à l'initialisation, comporte par exemple un ensemble 208A de micro-inverseurs reliant chacun une entrée correspondante du registre 242 au zéro logique (masse) ou au "1" logique (+ 5V. par exemple) suivant la position de l'inverseur. Cette position est fixée arbitrairement par le propriétaire du véhicule à la mise en service du dispositif de fermeture de l'invention. Le dispositif 208 peut également comporter un circuit 208B fournissant la valeur binaire de la date courante ou d'une date quelconque.

La fréquence de l'oscillateur 244 est quelconque (par exemple comprise entre quelques kHz et quelques MHz.) et elle n'a pas besoin d'être stable. Cet oscillateur est avantageusement un multivibrateur délivrant une tension sensiblement rectangulaire. On peut aussi utiliser un oscillateur sinusoïdal suivi d'un circuit de mise en forme (par exemple écrêteur suivi d'un trigger de Schmitt) délivrant une tension sensiblement rectangulaire. Le compteur binaire 243 compte constamment le nombre de périodes du signal de l'oscillateur 244 à partir de sa mise en fonctionnement. Le compteur 243 est remis à zéro dès qu'il atteint son état de comptage maximal (par exemple cet état est égal à 65536 si le compteur a 16 sorties). Si la fréquence de l'oscillateur 244 est d'au moins plusieurs kHz, la série de nombres présents sur ses sorties à des instants quelconques successifs (correspondant à des événements normaux tels que des mises en route de la voiture) distants de quelques dizaines de minutes ou de quelques heures peut être considérée comme aléatoire.

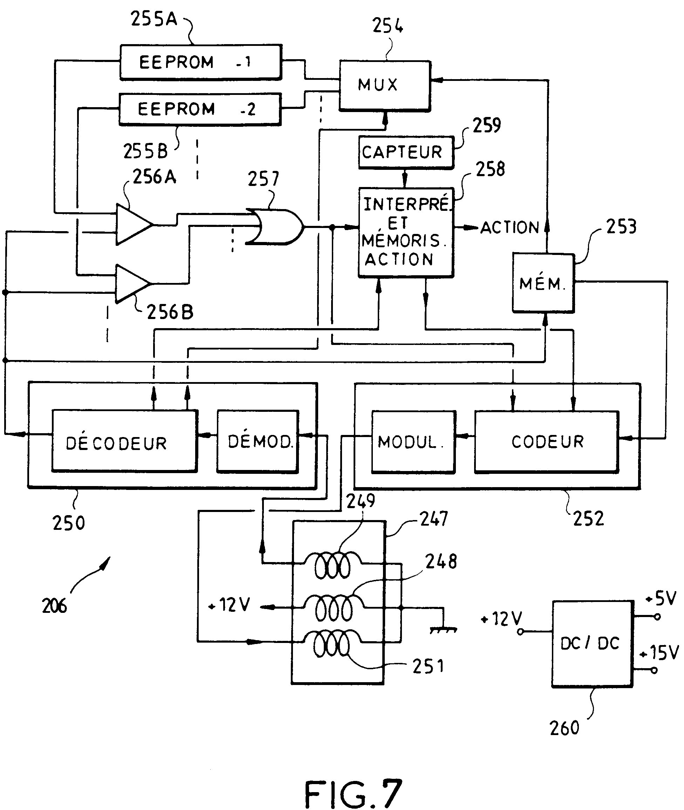

On a représenté en figure 7 le bloc diagramme de la partie électrique et de traitement de signal d'un module satellite quelconque, par exemple le module 206. Seule la partie "active" des modules est différente selon l'action qu'on leur fait exercer. Ce module 206 comporte un transformateur 247 à trois enroulements. L'un de ces enroulements, référencé 248, est relié entre la masse et le + 12 V. Un autre enroulement 249, est relié entre la masse et l'entrée d'un récepteur 250. Le troisième enroulement 251 est relié entre la masse et la sortie d'un émetteur 252. L'émetteur 252 est par ailleurs relié à la sortie du récepteur 250. Le récepteur 250 est relié par une mémoire temporaire 253 et un multiplexeur 254 à des mémoires électriquement effaçables 255A, 255B, ... (EEPROM par exemple). Les mémoires 255A, 255B, ... sont par ailleurs reliées à une entrée d'un comparateur correspondant 256A, 256B, ... dont l'autre entrée est reliée à la sortie du récepteur 250. Les sorties des comparateurs 256A, 256B, ... sont reliées, via un OU référencé 257 à un dispositif 258 de mémorisation d'ordres et d'interprétation d'ordres, qui est par ailleurs relié au récepteur 250 et à un capteur d'effraction grave 259. Le module 206 comporte également un convertisseur continu/continu 260 similaire au convertisseur 205A du module maître. La sortie de la porte 257 est par ailleurs reliée au codeur de l'émetteur 252. L'entrée de lecture de la mémoire 253 est reliée au codeur de l'émetteur 252. Le décodeur de récepteur 250 est relié à l'entrée de signaux d'horloge de la mémoire 253.

Le fonctionnement des trois catégories de sous-ensembles principaux du dispositif de fermeture de l'invention (clés électroniques, module maître et modules satellites) est le suivant. On suppose d'abord que la fermeture a été initialisée (l'initialisation est décrite plus loin ci-dessous), c'est-à-dire que les mémoires électriquement effaçables de tous les sous-ensembles contiennent des codes valides, étant bien entendu que le propriétaire du véhicule possède plusieurs clés 201A, 201B, ... comportant respectivement chacune une mémoire électriquement effaçable 214A, 214B ..., mémoires auxquelles correspondent respectivement les mémoires 230A, 230B ... du module maître et les mémoires 255A, 255B de chacun des modules satellites. Bien entendu, dans chaque clé, le dispositif de codage 215 ajoute au code confidentiel proprement dit (code mémorisé dans la mémoire 214A, ou 214B, ...) un préambule comportant au moins une information signifiant que le code est émis par une clé (pour le différencier des codes émis par le module maître et par les modules satellites) et une information de numéro de clé.

Lorsque le propriétaire du véhicule introduit une clé valide, par exemple la clé 201A comportant la mémoire 214A, dans l'allume-cigares 202, le convertisseur 221 de cette clé reçoit la tension + 12 V du véhicule, et alimente tous les circuits de cette clé. Le code mémorisé dans la mémoire 214A de cette clé module (dans le modulateur 212) la porteuse générée par l'oscillateur 213 et est transmis avec ledit préambule via les enroulements 211 et 210 du transformateur 209 au réseau électrique 203 du véhicule, et en particulier au module maître 205 et à tous les modules satellites 206, 207 .., selon un protocole approprié.

Dans le module maître 205, la porteuse modulée par ce code est transmise par le transformateur 219 au récepteur 225. Ce récepteur 225 démodule le signal reçu et en extrait le code (après suppression des informations de service telles que les bits de préambule, de parité, de "checksum", ...). Ce code est envoyé aux entrées correspondantes des comparateurs 228A, 228B, ... Ces comparateurs reçoivent sur leurs autres entrées reliées aux mémoires 230A, 230B,... les codes mémorisés dans ces mémoires. Si la clé est bien la clé 201A, le comparateur 228A émet à sa sortie un signal "OUI" (un "1" logique) qui est transmis via la porte 232 et la porte 233 (qui est validée par le décodeur du récepteur 225 si tous les modules satellites lui ont bien transmis un signal signifiant qu'ils ont aussi reconnu la clé 201A) à l'entrée CLK de signaux d'horloge du registre 242 qui envoie son contenu, déterminé à l'instant où le registre reçoit le front actif du signal "OUI", à l'émetteur 227 qui le mémorise temporairement. Ledit contenu du registre 242 est un nombre que l'on peut considérer comme aléatoire, qui est fonction de l'état du dispositif de personnalisation 208, et surtout de l'état de comptage du compteur 243, état qui varie à la fréquence de l'oscillateur 244.

En même temps, le récepteur 250 de chacun des modules satellites reçoit le signal modulé par le code de la clé (via les enroulements 248 et 249 du transformateur 247). Après démodulation et suppression des informations de service, ce code est transmis aux comparateurs 256A, 256B, ... Si ce code est bien celui de la clé 201A, le comparateur 256A émet un "OUI" sur sa sortie. Ce "OUI" est envoyé d'une part au dispositif 258, et d'autre part à l'émetteur 252 qui le transmet, selon un protocole approprié (incluant l'identité du module satellite), au module maître, qui attend les "OUI" de tous les modules satellites avant de procéder à la diffusion du nouveau code.

Si le module maître reçoit au moins un "NON" de la part des modules satellites, ou s'il produit lui-même un "NON", son émetteur 252 envoie un signal, codé de façon appropriée, à la clé pour lui demander de ré-émettre son code. Ce processus peut se répéter plusieurs fois, mais si au bout du dernier essai autorisé, au moins un "NON" subsiste, le module maître envoie aux modules satellites "passifs" (exerçant à l'arrêt de l'automobile une action de blocage du verrouillage du capot moteur, blocage de la direction, du frein de parcage ...) un signal de confirmation de blocage, et aux modules satellites "actifs" (exerçant une action de coupure électrique ou de destruction) un signal d'armement". Ce signal d'armement prépare ces modules actifs à agir dès que leur capteur 259 aura détecté une tentative d'effraction grave (ouverture forcée du capot moteur, remorquage ou levage de la voiture...).

Si le module maître reçoit un "OUI" des modules satellites et produit lui-même un "OUI", il passe à la phase suivante de diffusion du nouveau code.

Dès que le récepteur 225 a reçu tous les "OUI" précités, il envoie un signal de validation à l'émetteur 227 dont la mémoire temporaire a mémorisé le nouveau code. L'émetteur 227 diffuse ce nouveau code avec un préambule de reconnaissance, via le transformateur 222, sur le réseau 203, et donc à la clé 201A et à tous les modules satellites 206, 207, ...

Dans la clé 201A, l'enroulement 216 du transformateur 209 transmet le signal modulé au décodeur 219 qui en extrait le nouveau code et l'envoie à la mémoire 220 pour stockage temporaire. Lorsque la mémoire 220 a reçu le nouveau code, elle envoie via le codeur 215 un accusé de réception au module maître. Cet accusé de réception peut soit être un signal du type OUI/NON, soit, de préférence, le contenu du nouveau code reçu.

De façon analogue, le récepteur 250 de chacun des modules satellites reçoit ce nouveau code, le stocke dans la mémoire temporaire 253, et transmet un accusé de réception à l'émetteur 252, qui le renvoie, suivant un protocole approprié, via l'enroulement 251 du transformateur 247 et le réseau électrique 203, au module maître. Comme dans le cas de la clé, cet accusé de réception soit est du type OUI/NON, soit, de préférence, contient le nouveau code reçu. Dans le cas où les accusés de réception contiennent le nouveau code, le récepteur 225 du module maître transmet ce nouveau code, que lui renvoient les modules satellites, à l'émetteur 227 qui le compare à celui qu'il a mémorisé.

Bien entendu, les accusés de réception de la clé et des modules satellites sont émis de façon décalée dans le temps afin de ne pas interférer mutuellement. De façon avantageuse, le module maître émet individuellement (avec un préambule correspondant à l'identité du destinataire) le code destiné à la clé et à chacun des satellites, et attend un accusé de réception de chacun de ces éléments avant d'émettre le code à l'élément suivant. En variante, le module maître émet le nouveau code simultanément à tous les éléments mais chacun d'eux le renvoie avec un retard propre à cet élément, la durée de ce retard étant suffisante pour permettre une ou plusieurs re-diffussions de ce nouveau code.

Lorsque le module maître a reçu tous les bons accusés de réception, il envoie (une ou plusieurs fois) un ordre général de mémorisation du nouveau code. Dans la clé 201A, le décodeur 219 du récepteur 217 valide la sortie de la mémoire temporaire 220, dont le contenu (le nouveau code estimé bon par le module maître) est mémorisé dans la mémoire 214A. Dans chacun des modules satellites, le décodeur du récepteur 250 valide la sortie de la mémoire temporaire 253 dont le contenu est transmis, via le multiplexeur 254, à la mémoire 255A (le récepteur 250, sachant, grâce au préambule du code reçu, qu'il s'agit du code de la clé 201A, aiguille le multiplexeur 254 vers la mémoire 255A). Après cette phase de mémorisation, on peut laisser la clé dans son réceptacle, ou l'ôter, puisqu'à ce moment, et jusqu'à la coupure normale du contact principal, tous les modules actifs sont inhibés, et le module maître ne traite plus les éventuels signaux qu'il pourrait recevoir.

Dans le cas où la clé introduite dans le réceptacle 202 n'est pas la bonne, ni le module maître ni les modules satellites ne la reconnaissent pas, même après plusieurs essais de transmission de son code (sauf si, par hasard son code correspondait à l'un des codes mémorisés dans les mémoires 230A, 230B, ... et les mémoires 255A, 255B, ..., ce qui, statistiquement, est hautement improbable, puisque le code peut être très long, par exemple de 32 bits, soit moins d'une chance sur 4.10⁹). Dans ce cas, comme précisé ci-dessus, les modules "passifs" restent bloqués, et les modules "actifs" sont armés, dans l'attente d'une information d'effraction "grave" émise par l'un au moins des capteurs 259. Dès qu'une telle information est émise, le ou les module(s) actif(s) concerné(s) agit (agissent) par exemple en bloquant ou en détruisant au moins partiellement un élément électrique ou mécanique essentiel de la voiture et avertit tous les autres modules passifs par l'intermédiaire du module maître.

L'initialisation du dispositif de fermeture de l'invention se passe de la manière suivante. Toutes les mémoires électriquement effaçables (214A, 230A, 230B, ... et 255A, 255B ...) des clés et des différents modules achetés comportent le même code d'origine, par exemple, pour simplifier, le code zéro (c'est-à-dire que tous les bits du code sont à zéro). Lorsque tous les modules sont reliés au réseau électrique de la voiture, le multiplexeur 231 du module maître et le multiplexeur 254 de chaque module satellite sont aiguillés par les décodeurs de leurs récepteurs respectifs en première position (vers les mémoires 230A et 255A respectivement) correspondant à la clé numéro un. Etant donné que les mémoires de tous les éléments contiennent la même information (zéro), le registre 242 du générateur 229 du module maître reçoit une impulsion d'horloge qui "gèle" le nombre binaire présent à cet instant sur ses entrées. Ce nombre binaire, qui est le nouveau code de la clé numéro un est envoyé, selon le protocole décrit ci-dessus, par le module maître à la mémoire 214A de la clé, à la mémoire 230A et aux mémoires 255A de tous les modules satellites. Ensuite, lorsque le propriétaire introduit la clé suivante, les multiplexeurs 231 et 254 sont aiguillés en deuxième position. De la même façon, un autre code est mémorisé dans les mémoires 214B, 230B et 255B, et ainsi de suite pour toutes les autres clés. Bien entendu, le nombre de mémoires électriquement effaçables du module maître et des modules satellites est égal ou supérieur au nombre de clés que l'on utilise.

Lorsqu'une clé a été perdue, volée ou abîmée, ou si le propriétaire du véhicule veut mettre en service une clé de secours supplémentaire (si, à l'initialisation, le nombre de clés mises en service a été inférieur au nombre de mémoires électriquement effaçables), il doit tout d'abord introduire dans le réceptacle 202 une clé bonne, ce qui inhibe les modules satellites, et permet en particulier d'ouvrir le capot du compartiment moteur pour permettre l'accès au réceptacle 202' et au boîtier de commande 202''. Le propriétaire positionne tout d'abord le dispositif 236 sur le numéro de la clé à coder. Ce numéro est donc envoyé au multiplexeur 231 (via la porte 237) et au codeur de l'émetteur 227 (via la porte 238) qui le mémorise pour l'incorporer au code qu'il émettra ultérieurement.

Ensuite, le propriétaire active (par exemple en appuyant sur un bouton-poussoir) le dispositif 239 qui envoie une impulsion (via la porte 234) au registre 242 du générateur 229. Cette impulsion "gèle" le nombre binaire présent sur les entrées du registre à l'instant où elle lui parvient. Ce nombre est envoyé au codeur de l'émetteur 227, qui le mémorise avec le numéro de clé. Le dispositif 239 envoie également au codeur de l'émetteur 227 un ordre d'écoute. Cet ordre d'écoute est aussitôt diffusé sur le réseau 203 aux modules satellites et à la nouvelle clé (via le réceptacle 202') pour les mettre à l'écoute uniquement des messages provenant du module maître. Dès que ces éléments ont accusé réception de ce message d'écoute (de la même façon qu'ils accusent réception d'un nouveau code), le module maître leur envoie, selon la procédure habituelle décrite ci-dessus, le nouveau code.

Dans le cas où un voleur force la voiture et ne se sert pas du tout de clé électronique, l'un au moins des capteurs 259 des dispositifs 258 de tous les modules satellites, qui sont, à l'arrêt du véhicule, constamment à l'état de veille, est excité par l'action du voleur (ouverture forcée du capot ou de la colonne de direction, mise en marche du démarreur, remorquage ou levage du véhicule ...) et le signale à son dispositif 258. Celui-ci déclenche l'action de blocage ou de destruction qui lui est assignée, et en même temps l'information d'effraction (via son émetteur 252) au module maître qui en informe aussitôt tous les autres modules satellites, qui déclenchent leur propre action.

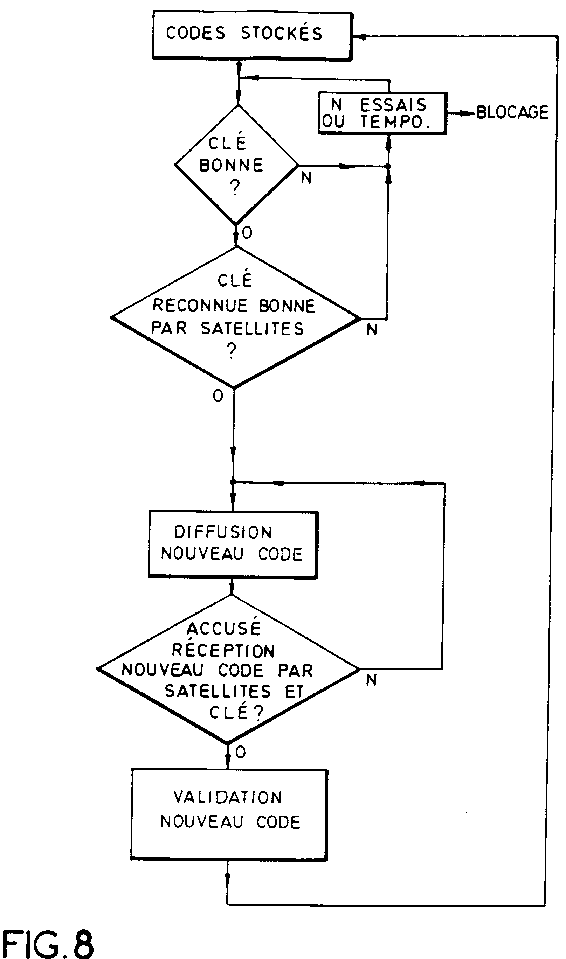

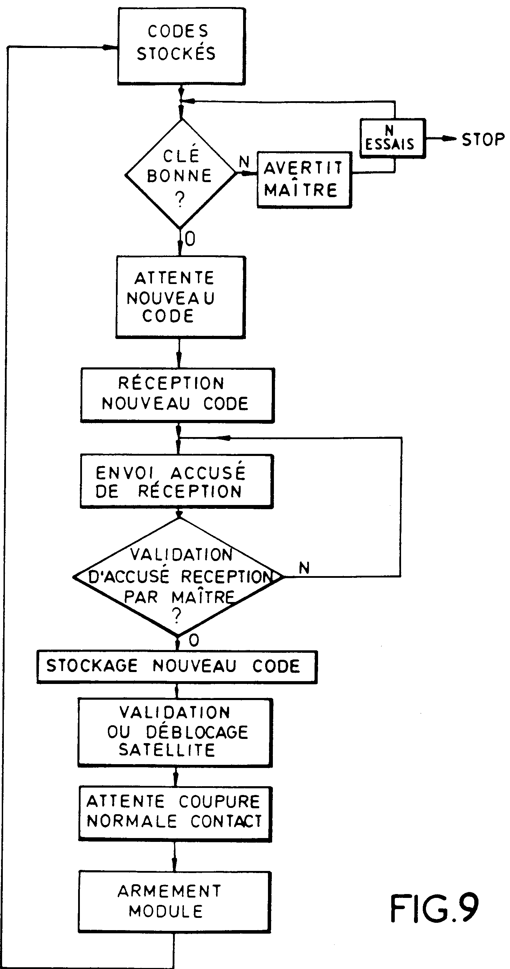

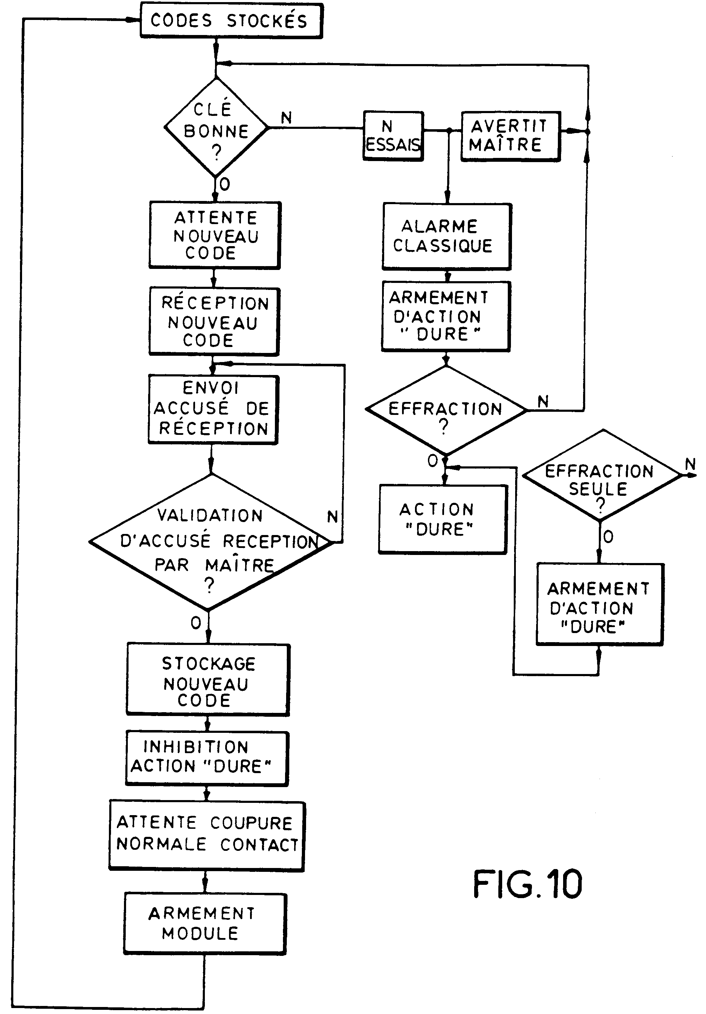

On a repris sur les organigrammes ("flow-charts") des figures 8 à 11 le fonctionnement des différents éléments du dispositif de fermeture de l'invention, une distinction étant établie entre modules satellites "passifs" (figure 9) et "actifs" (figure 10).

En figure 8, se rapportant au module maître, les codes étant stockés, le dispositif attend l'introduction d'une clé (dans le réceptacle 202). Si la clé introduite n'est pas la bonne, n essais sont permis (en variante, une temporisation sépare deux essais successifs autorisés). Après n essais infructueux, le module maître bloque tout essai pendant un certain temps (pré réglé en usine ou par l'utilisateur).

Si la clé est la bonne, le module maître attend les confirmations des modules satellites. Dès qu'il a reçu toutes ces confirmations, il diffuse le nouveau code qu'il a mémorisé temporairement, et attend les accusés de réception de la clé introduite et de tous les modules satellites. Dès qu'il a reçu tous ces accusés de réception, il valide le nouveau code, qui est mémorisé dans toutes les mémoires électriquement effaçables.

Pour chacun des modules satellites (figure 9) à action "passive" (sans destruction), les codes étant stockés, le module étant armé, attend l'introduction d'une clé. Si la clé introduite n'est pas la bonne, il en avertit le module maître et attend un nouvel essai (si celui-ci est autorisé par le module maître). Si la clé est la bonne, il se place dans l'attente de la réception d'un nouveau code.

Dès que ce nouveau code est reçu, le module en question envoie un accusé de réception au module maître. Si ce dernier n'a pas reçu tous les accusés de réception, ou a reçu au moins un mauvais accusé de réception, il fait répéter tous les modules (ou les modules fautifs). Lorsque tous les bons accusés de réception sont reçus par le module maître, celui-ci envoie un signal de validation à tous les modules satellites (et à la clé), qui procèdent au stockage de ce nouveau code et libèrent les organes qu'ils bloquaient (ou rétablissent les liaisons qu'ils coupaient) à l'arrêt du véhicule. Ensuite, tous ces modules restent dans l'attente de la coupure normale du contact principal du véhicule, et se réarment (blocage d'organes et/ou coupure de liaisons).

Dans le cas de chacun des modules (figure 10) à action "dure" (destruction ou blocage important de liaisons ou d'organes électriques et/ou mécaniques), si la clé introduite n'est pas reconnue bonne après N essais (N déterminé à la fabrication ou par le propriétaire du véhicule), le module en question en avertit le module maître, déclenche, si on le désire, une alarme classique, arme les moyens d'action "dure" (par exemple libère une goupille de sécurité ou ferme un contact mettant sous tension ces moyens), ceux-ci n'étant pas armés à l'arrêt de la voiture, ni en utilisation normale, afin d'éviter toute action "dure" intempestive en cas de fausse alarme (due à un choc, à des parasites captés par le réseau électrique de la voiture, ...). Si, alors, le capteur d'effraction du module détecte une effraction, il déclenche l'action "dure". Bien entendu, s'il se produit une effraction sans introduction de clé, il y a aussitôt armement des moyens d'action "dure" et déclenchement de ces moyens.

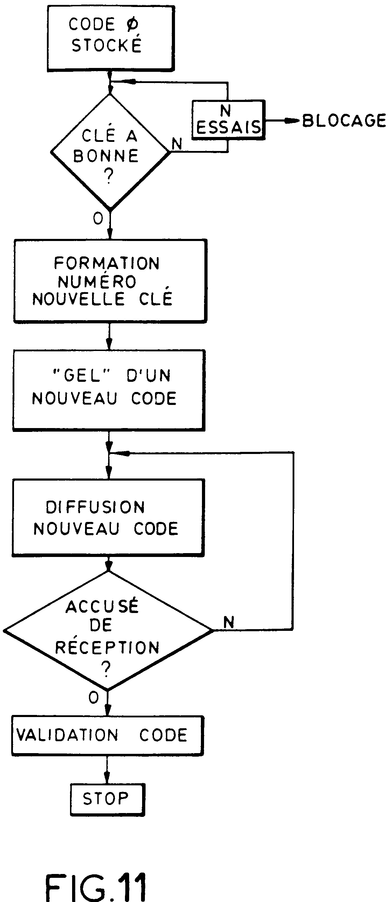

En figure 11, on a représenté l'organigramme de l'initialisation d'une nouvelle clé (dans laquelle est stocké un code nul par exemple). Pour cela, il faut d'abord introduire une clé bonne. Le dispositif est bloqué après N essais infructueux. Ensuite, l'utilisateur forme le numéro d'ordre de la clé à initialiser (sur le dispositif 236), puis active le dispositif 239, ce qui "gèle" I'état du compteur et définit un nouveau code qui est diffusé à la clé et à tous les modules. Lorsque le module maître a reçu les bons accusés de réception de la clé et de tous les modules satellites, il envoie un ordre de validation à ces éléments, et le processus s'arrête.

Ainsi, le dispositif de fermeture de l'invention présente un grand degré de sécurité, du fait que son code évolue de façon pratiquement aléatoire à chaque utilisation, et du fait que même si l'on copie la clé et/ou si on analyse la "serrure", on ne peut l'ouvrir, parce que le code évolue, et que la connaissance du code à un instant donné ne peut permettre de connaître le prochain code.

En plus de l'action de type électrique, telle que décrite ci-dessus ou au lieu de cette action de type électrique, les modules actifs de l'invention peuvent produire une action de type mécanique. Cette action peut être une action de destruction et/ou de blocage d'un élément électrique ou mécanique essentiel, ou une action empêchant le déblocage d'un élément normalement bloqué à l'arrêt de la voiture. Dans ce dernier cas, l'invention prévoit en particulier un dispositif électromécanique de blocage de barres de verrouillage du capot moteur. Ces barres sont fixées d'un côté soit au châssis, soit à la partie intérieure des ailes et de l'autre côté à une zone centrale du capot, c'est-à-dire loin des bords de ce capot, afin d'être difficilement accessibles et de nécessiter d'abîmer fortement le capot et la carrosserie. Au lieu de barres, on peut utiliser un filin d'acier enroulé sur un treuil fixé au châssis, ce treuil étant à commande électromécanique. Pour détecter l'ouverture forcée du capot, on peut soit munir sa face intérieure de jauges de contrainte, soit coller sur cette face un film métallique adhésif isolé du capot (l'outil de perçage du capot produit alors un contact électrique avec le film métallique, et on détecte ce contact très simplement).

Les moyens de destruction peuvent par exemple être à déclenchement pyrotechnique, et concerner soit des éléments électriques essentiels (alternateur, distributeur d'allumage, bobine d'induction, batterie, pompe électrique de carburant, circuit électronique de commande d'injection...), soit la destruction plus ou moins importante, ou le blocage d'éléments mécaniques essentiels (colonne ou tringlerie de direction, pompe mécanique de carburant, radiateur, transmission, suspension, courroie de distribution, ...). Bien entendu, lorsque les moyens de destruction sont de type pyrotechniqe, on les enferme, avec les éléments à détruire, dans une enceinte empêchant la destruction des éléments avoisinants que l'on ne veut pas abîmer ou détruire, et le cas échéant empêchant tout risque d'incendie. On peut également provoquer le blocage d'arrivée de l'essence et même le "noyage" du moteur par injection dans ses conduites d'admission d'air ou de carburant d'un fluide différent de son carburant habituel, par exemple de l'eau, des produits moussants, de l'huile, etc ...

Bien entendu, l'alarme sonore et/ou lumineuse classique d'effraction peut être conservée.

Avantageusement, les modules actifs sont commandés sélectivement. Ceux exerçant une action "douce" (coupure d'une liaison électrique ou d'une liaison mécanique facile à réparer, par exemple) sont les seuls à être déclenchés lors d'une effraction "simple" (c'est-à-dire, par exemple, crochetage d'une portière et forçage de l'antivol classique). Lors d'une effraction "grave" (c'est-à-dire, par exemple, forçage du capot moteur, remorquage, levage par grue, ...), les modules destructeurs ou bloqueurs sont déclenchés. Le déclenchement de ces modules est déterminé par des capteurs appropriés. S'il s'agit du forçage du capot, ces capteurs sont par exemple des jauges de contrainte fixées sur la face intérieure du capot ou sur les barres ou le filin d'acier de verrouillage de ce capot (ces barres ou ce filin étant fixés au capot près de son centre, comme précisé ci-dessus). S'il s'agit de remorquage ou de grutage, les capteurs sont par exemple des détecteurs de changement d'assiette du véhicule ou des détecteurs de variation de longueur des amortisseurs des quatre roues du véhicule.

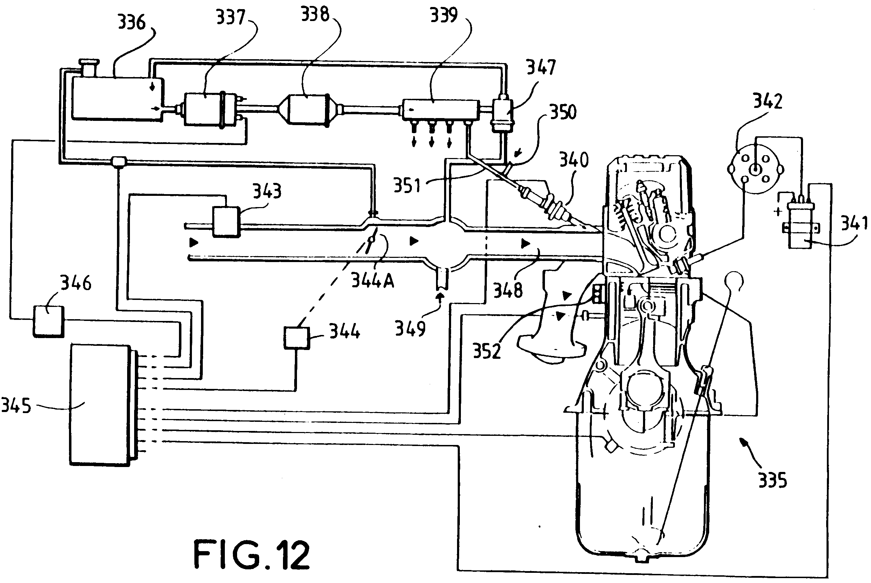

On a représenté en figure 12 une vue simplifiée d'un moteur thermique 335 de voiture automobile à injection d'essence et d'une partie des organes du dispositif d'injection d'essence qui lui sont associés. Ces organes sont: un réservoir d'essence 336, une pompe de carburant 337, un filtre à carburant 338, un répartiteur de carburant 339, des injecteurs 340, une bobine d'allumage 341, un distributeur haute tension 342, un débitmètre d'air 343, un capteur 344 de position du papillon 344A d'accélération, un dispositif 345 électronique de contrôle et de commande d'injection et d'allumage, et un relais 346 de mise en service de la pompe à carburant 338. Un régulateur de pression 347 mesure la pression d'air dans la conduite 348 d'admission d'air et régule le retour de carburant vers le réservoir 336 par la conduite 348.

On a représenté en 349, 350 et 352 trois sortes d'accès possibles aux trajets d'air ou de carburant, par l'un au moins desquels on injecte selon l'invention un fluide de blocage du moteur, sans pratiquement endommager le moteur.

Un premier accès 349 se situe sur la conduite 348 en aval du papillon 344A. Une deuxième sorte d'accès 350 se situe sur la conduite individuelle 351 d'au moins un injecteur 340, entre le répartiteur 339 et cet injecteur. Une troisième sorte d'accès est constituée par le bouchon 352 de visite de rampe d'injection (vissé sur le bloc-moteur).

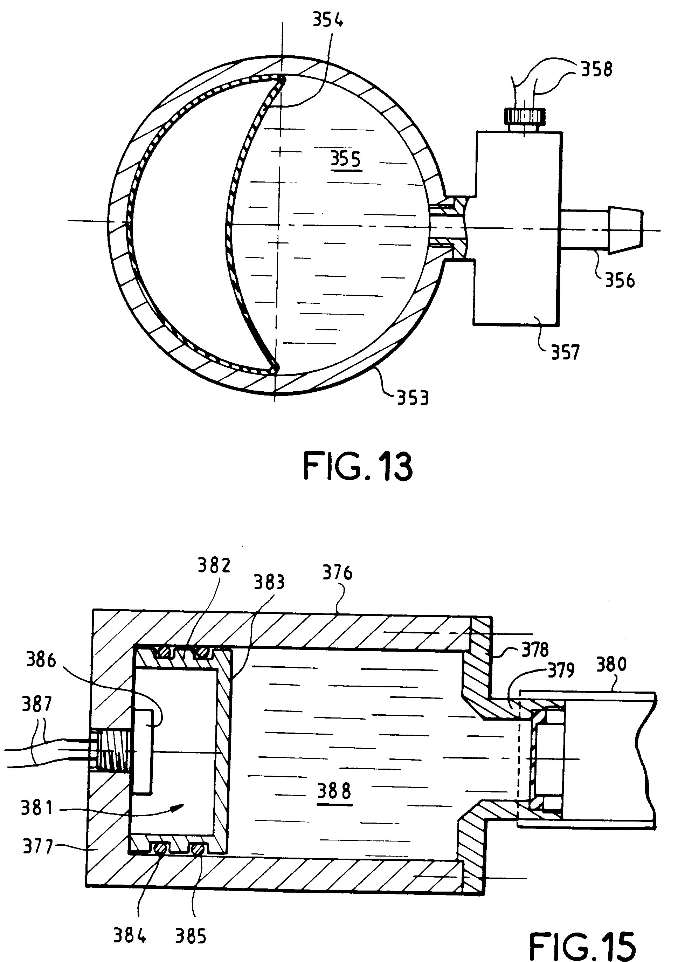

On relie à ces accès l'un des dispositifs d'éjection de fluide décrits ci-dessous en référence aux figures 13 à 16, ou tout autre dispositif équivalent.

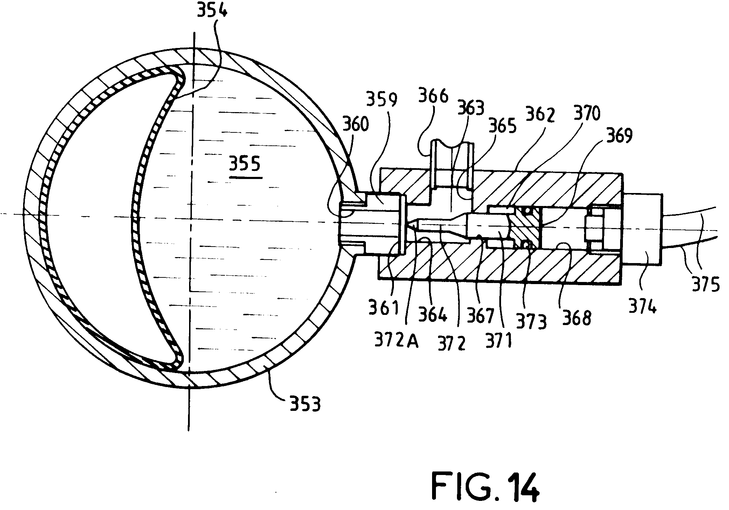

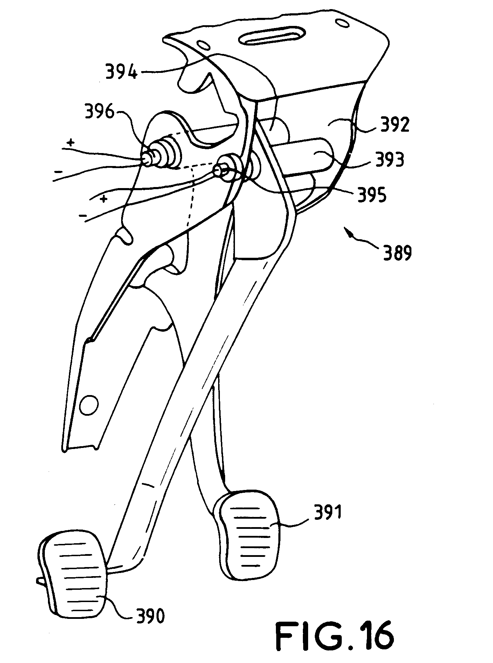

Un dispositif d'éjection de fluide conforme à l'invention comporte essentiellement un réservoir rempli de fluide pouvant être éjecté vers l'un des accès précités (349, 350 ou 352) sous une pression d'environ 100 bars sous la commande de l'un des modules actifs décrits ci-dessus en référence à la figure 1. La pression peut être exercée en permanence sur le fluide (modes de réalisation des figures 13 et 14) ou seulement au moment de l'éjection (mode de réalisation de la figure 15). Le fluide peut être de l'eau, de l'huile, de la mousse, ... ou, dans le cas de l'éjection vers l'accès 350, une solution huileuse contenant des micro-billes (par exemple en verre) dont le diamètre est légèrement supérieur au diamètre intérieur de la buse des injecteurs 340, afin de les bloquer.

Le dispositif d'éjection de la figure 13 comporte un réservoir sphérique 353, d'un diamètre de l'ordre de 10 cm, par exemple du type utilisé pour les circuits hydrauliques de suspension de certaines des voitures Citroën. Ce réservoir 353 renferme une poche 354 contenant de l'azote et occupant une partie du volume du réservoir. Le reste du volume est occupé par un fluide 355 introduit sous pression par une conduite 356, située à l'opposé de la poche 354, et fixée sur le réservoir 353. Une électrovanne 357 est insérée sur la conduite 356 et l'obture (lorsqu'elle n'est pas excitée), maintenant ainsi le fluide 355 sous pression grâce à la pression exercée par l'azote comprimé dans la poche 354 (pression d'environ 100 bars). Les conducteurs 358 de commande de l'électrovanne 357 sont reliés à l'un des modules actifs décrits ci-dessus. La conduite 356 est reliée à l'un des accès 349, 350 ou 352 décrits ci-dessus. Lorsque la vanne 357 est excitée, elle libère le fluide 355 sous pression qui est éjecté par la conduite 356 vers le moteur pour le bloquer.

Le dispositif d'éjection représenté en figure 14 reprend le même réservoir 353 que celui du mode de réalisation de la figure 13. On fixe sur l'ouverture du réservoir 353 un bouchon 359 percé d'un alésage axial 360. L'alésage 360 est obturé, à son extrémité opposée à celle pénétrant dans le réservoir 353, par un opercule 361 suffisamment solide pour résister à la pression exercée sur lui par le fluide 355 (qui est introduit sous pression dans le réservoir 353 avant fermeture par le bouchon 359).

On fixe sur le corps du bouchon 359 une vanne 362 à déclenchement pyrotechnique. La vanne 362 a une forme générale de cylindre, fixé coaxialement sur le bouchon 359. L'extrémité de la vanne fixée sur le bouchon 359 comporte un court alésage 363 dont la première partie 364, partant de l'extrémité de la vanne fixée sur le bouchon 359, est axiale et s'étend sur environ 1/3 de la longueur du cylindre. L'extrémité intérieure de cette première partie 364 communique avec la seconde partie 365 qui s'étend radialement en débouchant vers l'extérieur. Au débouché de l'alésage 365, on fixe une conduite 366, reliée à l'un des accès moteur précités.

La première partie 364 de l'alésage 363 communique, via un étranglement 367, avec un deuxième alésage 368 axial et débouchant à l'extrémité de la vanne opposée à celle fixée sur le bouchon 359. La tête 369 d'un pointeau cylindrique 370 se déplace dans l'alésage 368 en formant piston. La partie centrale 371 du pointeau 370, de diamètre pratiquement égal à celui de l'étranglement 367, passe par cet étranglement. L'extrémité 372 du pointeau 370, qui a un diamètre inférieur à celui de la partie centrale 371, pénètre dans l'alésage 364 et se termine en pointe 372A. On forme sur la tête 369 du pointeau 370 une gorge périphérique dans laquelle on dispose un joint torique 373 d'étanchéité. Sur l'extrémité libre de l'alésage 368 on fixe de façon étanche un générateur de gaz 374 pyrotechnique à commande électrique. Une chambre de pression 368A est ainsi formée dans l'alésage 368 entre la tête 369 et le générateur 374. Les conducteurs 375 de cette commande électrique sont reliés à l'un des modules actifs décrits ci-dessus. Bien entendu, la valeur de la tension de commande délivrée par le module actif en question est compatible avec la valeur nécessaire à la commande du générateur 374.

Au repos (position représentée en figure 14), la pointe 372A du pointeau 370 est éloignée de l'opercule 361, et sa tête 369 est éloignée de l'étranglement 367. Lorsque le module actif en question est activé par suite d'une effraction caractérisée, il excite le générateur de gaz 374 qui éjecte dans la chambre 368A du gaz sous forte pression qui pousse très violemment le pointeau 369 vers l'opercule 361. La pointe 372A du pointeau perce alors cet opercule. Le fluide 355 sous pression est alors libéré et est éjecté sous forte pression par la conduite 366 vers le moteur, pour le bloquer.

On a représenté en figure 15 un troisième mode de réalisation d'un dispositif d'éjection conforme à l'invention. Ce dispositif comporte un réservoir cylindrique creux 376 fermé à l'une de ses extrémités par une paroi transversale 377 formée intégralement avec le cylindre. Sur l'autre extrémité du cylindre on fixe une paroi transversale 378 munie d'une collerette axiale 379 faisant saillie vers l'extérieur. Sur la collerette 379, on fixe une conduite 380 reliée à l'un desdits accès au moteur.

A l'intérieur du cylindre 376, on dispose, contre la paroi 377, un piston 381 comportant une paroi cylindrique creuse 382 fermée à son extrémité située à l'opposé de la paroi 377 par une paroi transversale plane 383. La longueur axiale du piston 381 est approximativement égale à 1/4 de celle du cylindre 376. A la périphérie extérieure du cylindre 382, on forme deux gorges parallèles dans chacune desquelles on dispose un joint torique d'étanchéité, respectivement référencé 384, 385.

Au centre de la paroi 377, on fixe un générateur de gaz pyrotechnique 386 à commande électrique. Ce générateur débouche dans la chambre 381A délimitée par la paroi 377 et les parois 382, 383 du piston 381. Les conducteurs 387 de commande électrique du générateur 387 sont reliés à l'un des modules actifs décrits ci-dessus.

On remplit le volume intérieur du réservoir 376, délimité par la paroi 383 du piston 381 et la paroi 378, avec un fluide 388 à la pression atmosphérique, et on obture la collerette 379 par une membrane 389 étanche.

Lorsque le module actif en question est déclenché par une effraction caractérisée, il commande le générateur 386 qui éjecte du gaz sous très forte pression (par exemple environ 100 bars) dans la chambre 381A en poussant très violemment le piston 381, ce qui comprime très fortement le fluide 388. Le fluide 388 comprimé perce aussitôt la membrane 389 et est éjecté sous forte pression par la conduite 380 vers l'accès au moteur auquel elle est reliée, bloquant aussitôt le moteur. En variante, l'invention prévoit de disposer sous le cache-culbuteur un réservoir contenant un produit expansible ou un produit réagissant avec l'huile du moteur (pour gripper le moteur). Ce réservoir est obturé par une vanne ou un opercule commandable par un module actif de la façon décrite ci-dessus (figure 13 ou 14).

On a représenté en figure 16 un ensemble 389 de pédale d'embrayage 390 et de frein 391. Ces pédales sont généralement montées sur un étrier 391 par l'intermédiaire d'axes 393, 394 respectivement. Selon l'invention, on remplace, pour chaque axe l'un des boulons de fixation sur l'étrier (ou les deux boulons) par un boulon explosif de type connu en soi, respectivement 395, 396. Ces boulons sont à commande électrique, et sont reliés à un module actif. Lors du déclenchement de ce module par suite d'une effraction, les boulons explosent, ce qui désolidarise les pédales 390, 391 de l'étrier 392 et empêche leur remontage rapide, par suite de la destruction partielle de l'étrier (au niveau des boulons). Des boulons explosifs analogues peuvent être utilisés pour d'autres éléments essentiels du véhicule (direction, suspension, alternateur, ...). Bien entendu, lorsque les éléments comportant des boulons explosifs sont accessibles de l'extérieur, I'accès à ces boulons est discret et/ou protégé (protection par exemple par un capot lui-même solidaire d'un capteur d'effraction, ...). Bien entendu, tous les modules actifs sont désactivés de façon sûre lorsque le véhicule est mis en marche par son propriétaire. Dans le cas de voitures de location, pour lesquelles un client mal intentionné pourrait désactiver définitivement les modules actifs et/ou les moyens d'action commandés par ces modules, on groupe les modules dans le compartiment moteur (qui est fermé par le bas, ou bien on dispose ces modules dans un endroit de ce compartiment inaccessible par le bas), et on interdit l'ouverture du capot moteur à tout client, grâce à un système de verrouillage commandé par un module actif qui ne peut être désactivé que par le propriétaire. Les moyens d'action ou les détecteurs qui ne peuvent être disposés dans le compartiment moteur (par exemple capteurs de modification des suspensions, pour prévenir un levage par grue, ou moyens de destruction des fusées de roues) sont autoprotégés, en étant, par exemple, enfermés dans des boîtiers particularisés (par exemple, par une "puce" électronique contenant un code secret et intégrée au boîtier) munis de détecteurs d'effraction et de modules actifs qui commandent par exemple la destruction de ces boîtiers et de leur dispositif de particularisation.

Les modules actifs du dispositif de l'invention sont faciles à installer sur une voiture déjà en service. Ces modules ont un effet dissuasif même envers des voleurs résolus et organisés, car en cas d'effraction grave, caractérisant l'intention ferme de dérober le véhicule, des éléments essentiels du véhicule sont détruits, éléments dont le remplacement diminuerait considérablement le bénéfice qu'un voleur pourrait tirer de la vente de ce véhicule. De plus, le blocage d'éléments essentiels nécessite une réparation trop longue et peu discrète pour un voleur non équipé de moyens de remorquage ou de levage.

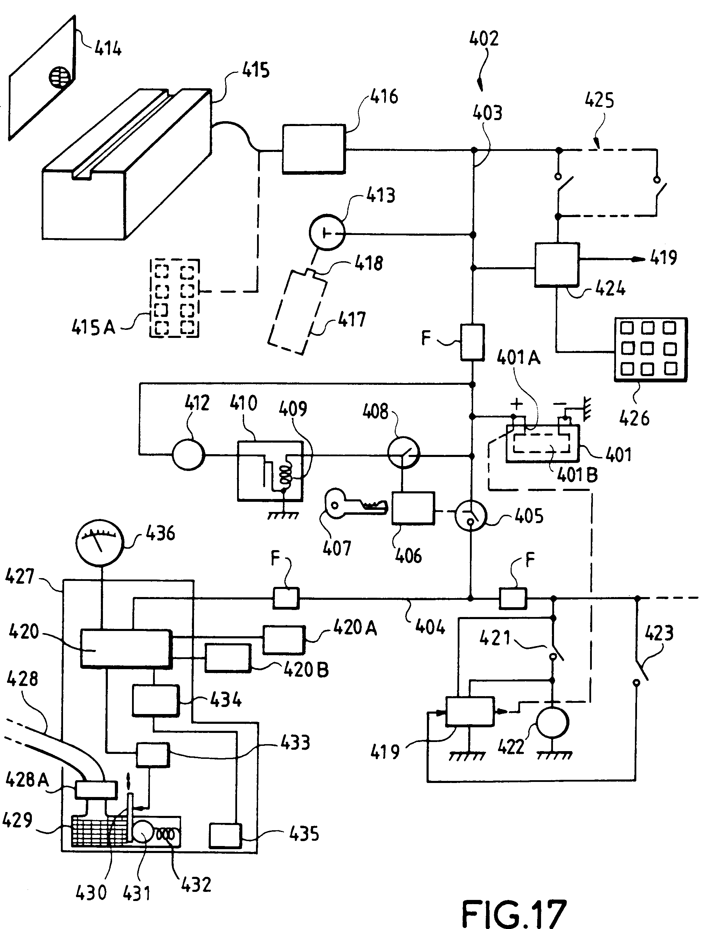

Sur la figure 17 on a schématiquement représenté les éléments électriques de la voiture dont se sert le dispositif de l'invention. Sur cette figure, on a référencé 401 la batterie de la voiture. Cette batterie est reliée au réseau électrique 402. Ce réseau 402 comprend habituellement un ou plusieurs conducteurs 403 constamment galvaniquement reliés à la batterie 402 et plusieurs conducteurs 404 reliés à la batterie via un contacteur principal 405 commandé par un dispositif mécanique "antivol" classique 406, lui-même commandé par une clé mécanique classique 407. Le dispositif 406 commande également un contacteur de démarrage 408 reliant l'enroulement d'excitation 409 d'un relais de démarrage 410 à la batterie 401. Un contact 411 du relais 410 permet d'alimenter le démarreur 412 par la batterie 401. Des fusibles F relient généralement le conducteur 403 à la batterie et les conducteurs 404 au contacteur 405. Généralement, une prise 413 d'allume-cigares est reliée au conducteur 403.

On va décrire maintenant les éléments de l'invention qui sont reliés au réseau 402. Le dispositif antivol de l'invention met en oeuvre un dispositif de production de code, qui est dans le cas présent une "clé", différente de la clé habituelle 407. Le réceptacle de cette "clé" est un élément distinct du (ou des) dispositif(s) faisant office de serrure (modules actifs décrits ci-dessous). En outre la "serrure" utilisée est différente des serrures classiques, telles que les serrures de portières et la serrure 406 coopérant avec la clé 407. Cette "serrure" comporte en fait plusieurs modules actifs décrits ci-dessous, répartis dans la voiture et exerçant pour les uns, par exemple une action de coupure électrique, et ce de façon discrète et difficilement détectable, et pour les autres, une action sur le circuit de carburant et sur l'indicateur de niveau de carburant.

La "clé" utilisée par l'invention est un dispositif pouvant mémoriser au moins un code confidentiel. Comme illustré sur le dessin, cette clé est par exemple une carte à puce 414 ("Smart Card" en anglais) d'un type couramment utilisé pour les opérations bancaires ou pour les décodeurs de télévision à péage. En variante, la carte 414 peut être une simple carte à bande magnétique imprimée sur une de ses faces. Cette carte 414 coopère avec un lecteur 415 approprié, fixé par exemple sur le tableau de bord de la voiture. Le lecteur 415 est relié via un dispositif d'émission 416 au conducteur 403. Le dispositif 416 est un modulateur dont la fréquence porteuse, avantageusement de quelques MHz (par exemple de 1 à 10 MHz), est modulée par les signaux basse fréquence issus du lecteur 415. La réalisation d'un tel modulateur est évidente pour l'homme de l'art, et ne sera pas décrite ici. Selon une variante, représentée en traits interrompus, on remplace les éléments 414 et 415 par un clavier 415A relié au modulateur 416.

En variante, comme représenté en traits interrompus sur la figure 17, le réceptacle est constitué par la prise d'allume-cigares 413 de la voiture. Dans ce cas, la "clé" se présente sous forme d'un élément cylindrique 417 muni d'un embout 418 adapté à la prise 413, et elle contient un dispositif de mémorisation programmable similaire à celui d'une carte à puce, ou simplement une mémoire morte ou une mémoire électriquement reprogrammable, et un dispositif modulateur similaire au dispositif 416.

Le propriétaire de la voiture relie à la ligne 404, et/ou à la ligne 403, un ou plusieurs modules "actifs", à n'importe quel endroit de l'une de ces lignes. On a représenté sur le dessin deux tels modules, référencés 419 et 420. Le module 419 est par exemple branché en aval de l'interrupteur 421 mettant en marche le ventilateur 422 d'aération de la voiture. Le module 419 commande par exemple la destruction d'un fusible 401A inséré entre les plaques de plomb 401 B et une borne de connexion (par exemple la borne +) de l'accumulateur 401. Pour compliquer la détection de ces branchements, on peut disposer sur la planche de bord un ou plusieurs interrupteurs de leurrage qui soit ne sont électriquement reliés à rien, soit dont les deux bornes sont reliées au même conducteur 404, soit des interrupteurs commandant directement l'activation d'au moins un module, comme c'est le cas pour l'interrupteur 423 qui commande le déclenchement du module 419. D'autres branchements des modules actifs sont évidemment possibles, par exemple sur l'une des bornes fixes d'un commutateur à plusieurs positions, ou sur des claviers de codage nécessitant de former un code confidentiel, ...

De façon avantageuse, on branche sur le conducteur 403 un dispositif de temporisation 424 mis en marche par l'ouverture d'au moins l'une des portières de la voiture (par l'un des interrupteurs 425 commandés par l'ouverture des portières). Le dispositif 424 est désactivé par un code que l'on doit former sur un clavier 426. Si la temporisation du dispositif 424, de durée réglable, est écoulée avant que le bon code ne soit formé sur le clavier 426, ce dispositif 424 active au moins l'un des modules 419, 420 .. Bien entendu, le dispositif 424 est disposé dans un endroit discret et auquel on ne peut pas accéder rapidement, par exemple dans le compartiment moteur, ce qui est avantageux lorsque, comme décrit ci-dessous, le capot de ce compartiment est verrouillé conformément à une caractéristique de l'invention. Le clavier 426 peut être remplacé par tout dispositif équivalent, le lecteur 415, coopérant avec la carte 414 pouvant en tenir lieu par exemple. Il est également bien entendu que le dispositif 424 peut être relié à des fils-leurres. Ce dispositif de temporisation permet également de fixer un temps minimum après un essai infructueux, avant de pouvoir essayer un autre code, et permet également de limiter (par exemple à cinq ou six) le nombre d'essais infructueux avant d'inhiber tout autre essai et/ou d'agir sur un module actif. Les moyens 424 à 426 peuvent être considérés comme constituant un détecteur d'intrusion illégale dans le véhicule, mais il est bien entendu qu'un tel détecteur peut être réalisé différemment, par exemple un détecteur d'effraction de l'antivol 6 ou de bris de vitres.

On a également représenté sur la figure 17 le réservoir 427 de carburant du véhicule. Un tuyau 428 conduit le carburant aspiré dans le réservoir 427 vers la pompe à carburant (non représentée) du moteur de ce véhicule. Le tuyau 428 se termine par un plongeur 429 (crépinette) se présentant généralement sous la forme d'un petit boîtier fermé dont une paroi est remplacée par un fin grillage par lequel passe le carburant aspiré par la pompe à carburant. Le tuyau 428 arrive à une extrémité du plongeur 429 qui est obturé à peu près en son milieu par une cloison 430 mobile transversalement. Le compartiment du plongeur, à l'opposé de celui dans lequel débouche le tuyau 28 par rapport à la cloison mobile 430, comporte une bille 431 sollicitée par un ressort 432 vers la cloison 430. La bille 431 est par exemple en verre, et son diamètre est légèrement supérieur au diamètre du tuyau 428. La cloison 430 est actionnée par un électroaimant 433 de façon à libérer le passage de la bille vers l'embouchure du tuyau 428 lorsque l'électroaimant 433 est excité.

Le réservoir renferme également une jauge classique à carburant 434 associée à un capteur 435 de niveau de carburant. Toutefois, la jauge 434 n'est pas directement reliée au galvanomètre 436 d'indication de niveau de carburant (disposé sur le tableau de bord du véhicule), mais à travers le module actif 420. Le module 420 est par ailleurs relié au réseau électrique 404 du véhicule.

Selon une caractéristique de l'invention, le véhicule comporte un dispositif de détection de tentative de vol sérieuse. En effet, on peut considérer que, si un malfaiteur peu déterminé crochète les portières (ce qui déclenche le fonctionnement du module 419 qui coupe simplement un circuit tel que la liaison interne 401A de la batterie) et abandonne lorsqu'il constate qu'il ne peut faire démarrer le véhicule, sans chercher davantage, il n'y a pas lieu de déclencher de moyens de dissuasion plus efficaces. Par contre, si un malfaiteur plus déterminé persévère dans la recherche de la cause de cette panne volontaire, il y a lieu de déclencher des moyens de dissuasion plus efficaces. Le dispositif chargé de détecter une telle tentative de vol plus sérieuse peut par exemple comporter un dispositif de blocage renforcé du capot du compartiment moteur associé à un dispositif de détection d'ouverture forcée du capot.

Le dispositif de blocage renforcé du capot peut par exemple comporter, en plus des moyens classiques de verrouillage du capot, un anneau solidement fixé à peu près au centre de la face inférieure du capot, et un tambour sur lequel peut être enroulé un câble d'acier, une des extrémités de ce câble étant fixée au tambour, et l'autre à un crochet que l'on accroche audit anneau du capot. Le support du tambour est solidement fixé au châssis du véhicule, et comporte un ressort ou un moteur électrique enroulant le câble sur le tambour lorsque l'on ferme le capot, et des moyens bloquant le tambour en rotation lorsque le capot est fermé. Ces moyens de blocage ne peuvent être désactivés que si la bonne "clé" (414, 415A ou 417) est utilisée.

Etant donné que les moyens de blocage renforcé du capot sont fixés à peu près au centre de sa face inférieure, on ne peut forcer l'ouverture du capot (lorsque l'on ne possède pas la bonne "clé") qu'en le tordant, par exemple en en soulevant un bord à l'aide d'un levier. Une telle déformation du capot peut être détectée par exemple à l'aide de capteurs 420A tels que des jauges de contrainte fixées sur la face inférieure du capot ou sur le câble. Ces capteurs sont reliés au module actif 420 pour en activer le déclenchement.

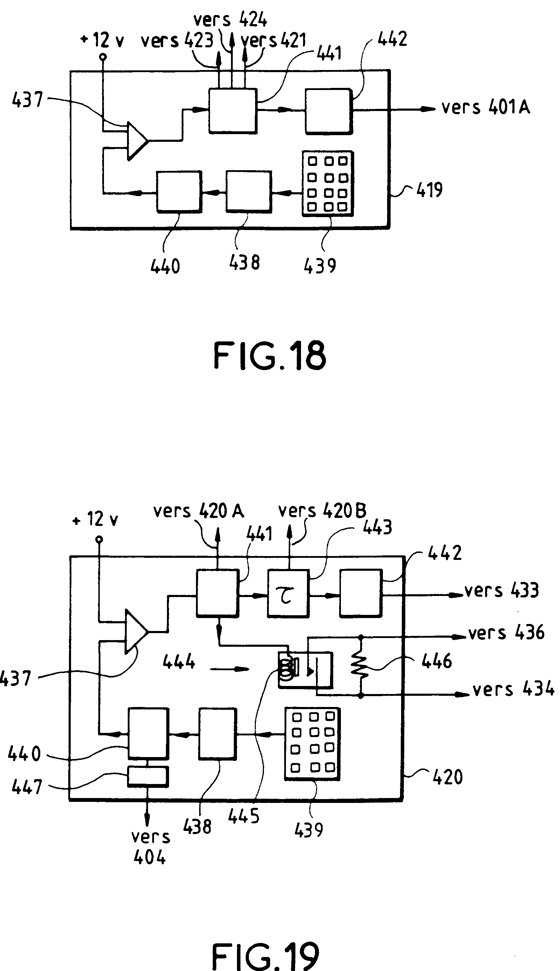

Dès que le détecteur 420A détecte l'effraction du capot du véhicule, il active le module 420. De façon avantageuse, ce module 420 est relié à un dispositif 420B de mesure de la vitesse de rotation du moteur et/ou de la vitesse du véhicule. Un tel dispositif tachymétrique équipe la plupart des voitures automobiles, et il est facile d'y prélever une information qui est fonction de la vitesse de rotation du moteur et/ou du véhicule. Le module 420 comporte alors, comme décrit ci-dessous en référence à la figure 19, un circuit de temporisation dont le délai de déclenchement est fonction inverse de la vitesse de rotation du moteur. Ainsi, lorsque le véhicule venant d'être volé circule aussitôt dans des rues à circulation fluide, son moteur tourne rapidement, et le circuit de temporisation doit être déclenché assez rapidement, afin de stopper le véhicule au bout d'un parcours qui n'est ni trop court (pour lui permettre de quitter son lieu de garage, qui est en général assez discret, puisque c'est dans un tel cas qu'il risque le plus le vol) ni trop long (pour éviter que le voleur ait le temps de le conduire en un endroit où il peut le maquiller). De préférence, le module 420 n'agit sur l'électroaimant 433, après l'écoulement du délai dudit circuit de temporisation, que lorsque le véhicule s'arrête (feu rouge, croisement ...) ou ralentit très fortement, afin de ne pas risquer d'immobiliser la voiture volée en pleine vitesse. Ce parcours peut être par exemple compris entre quelques centaines de mètres et quelques kilomètres. Dans le cas où le véhicule pénètre aussitôt après le vol dans une circulation encombrée, son moteur tourne au ralenti, et le circuit de temporisation se déclenche plus tard, ce qui fait que le véhicule aura parcouru à peu près la même distance que dans le cas précédent, avant le déclenchement du circuit de temporisation. Ce déclenchement active l'électroaimant 433.

En outre, le module 420 comporte un circuit faussant, en cas de détection d'effraction du capot, la valeur affichée par le galvanomètre 436. Cette valeur affichée peut être faussée dès la mise en route frauduleuse du véhicule et peut être presque nulle, ce qui corrobore la vraisemblance de la coupure de l'arrivée d'essence déclenchée peu après la mise en route. Ce faux affichage peut être produit simplement par la mise en série d'une résistance de forte valeur dans le conducteur relié au galvanomètre 436.

On a représenté en figure 18 le bloc-diagramme du module 419. Ce module actif comporte un dispositif comparateur 437 relié à l'entrée du module et à un dispositif de codage interne 438. Ce dispositif de codage est associé à un dispositif de formation de code 439, par exemple du type à roues codeuses ou à micro-interrupteurs, qui est programmé par le propriétaire de la voiture pour mémoriser dans une mémoire 440 du dispositif de codage le code qu'il a choisi. La sortie du comparateur 437 est reliée à un dispositif déclencheur 441 (qui peut être par exemple un simple amplificateur) commandant un dispositif actif 442 (qui peut par exemple être un relais).

Lorsqu'un code émis par le dispositif 416, lors de la lecture de la carte 414, arrive au comparateur 437, l'interrupteur de sécurité étant fermé, le comparateur 437 le compare au code mémorisé dans la mémoire 440. Si le code émis est le bon, le signal "bon" transmis par le comparateur 437 au déclencheur 441 n'active pas celui-ci, et rien ne se passe. Dans le cas contraire, le déclencheur 441 commande le dispositif 442.

On a représenté en figure 19 le bloc-diagramme du module actif 420. Les mêmes éléments que ceux du module 419 de la figure 18 y sont affectés des mêmes références numériques.

Le déclencheur 441 est relié d'une part à un dispositif 443 de temporisation, et d'autre part à un dispositif 444 de mise en série de résistance. Le dispositif 443 est relié au dispositif 420B de mesure de vitesse de rotation du moteur. En variante, le dispositif 420B peut fournir une information qui est fonction de la vitesse du véhicule. Ce dispositif 420B est bien connu en soi et ne sera pas décrit plus en détail. La sortie du dispositif 443 commande l'électroaimant 433. Le dispositif 444 comporte par exemple un relais 445, commandé par le déclencheur 441, et court-circuitant, en utilisation normale, une résistance 446 insérée dans le conducteur reliant la jauge 434 au galvanomètre 436. En cas d'effraction du capot du véhicule, le relais 445 ne court-circuite plus la résistance 446, ce qui fait indiquer au galvanomètre 436 une valeur presque nulle.

Bien entendu, le module 420 peut, en outre, activer des moyens avertisseurs classiques (avertisseur sonore et/ou lumineux), ainsi qu'une balise de signalisation coopérant avec un système de repérage par satellite, du type GPS ("Global Positioning System).

Selon une caractéristique avantageuse de l'invention, on mémorise dans la mémoire 440 du module 420 des informations concernant le débit de carburant passant par le tuyau 428 (à l'aide d'un débit-mètre 428A inséré dans ce tuyau) et/ou concernant le niveau de carburant dans le réservoir 427, ce qui est aisé puisque le module 420 est disposé dans ce réservoir. Ces informations sont ensuite prélevées en interrogeant le module 420 à partir d'une clé spécialisée, telle que la clé 417, mais comportant en outre, un bouton, manoeuvré par l'utilisateur, et commandant l'envoi d'un code d'interrogation via le modulateur intégré dans cette clé. Cette clé comporte en outre un démodulateur, pour démoduler l'information transmise par le module 420, une partie de sa mémoire étant réservée à la mémorisation des informations envoyées par le module 420 (l'autre partie de sa mémoire mémorisant le ou les codes confidentiels précités). La lecture des informations reçues par cette clé se fait alors sur tout dispositif approprié, par exemple sur un micro-ordinateur équipé d'un connecteur similaire au connecteur 413, et mettant en oeuvre un programme approprié d'exploitation de ces informations. Bien entendu, le module 420 comporte un modulateur 447 relié à sa mémoire 440 pour en lire lesdites informations concernant le débit et/ou le niveau de carburant, et transmettre ces informations sur le réseau 402. Bien entendu, d'autres informations peuvent être mémorisées dans ladite clé spécialisée: distance parcourue par le véhicule depuis le dernier relevé, régimes du moteur, ... à l'aide de capteurs appropriés reliés par un modulateur au réseau 402.

En conclusion, ce mode de réalisation du dispositif de l'invention est facile à installer sur une voiture déjà en service: on se sert, en tant que moyen de transmission du code de mise en route, du réseau électrique existant. On branche sur ce réseau un dispositif émetteur (dispositif 417 ne nécessitant aucune adjonction de fils, ou dispositifs 415 ou 415A et 416 à branchement très simple) et plusieurs modules actifs récepteurs dont le branchement est également très simple (en un endroit quelconque du réseau électrique de la voiture) et qui agissent discrètement sur des dispositifs faciles à insérer (interrupteurs tels que 401A ou fusibles en série avec des organes vitaux). Si le voleur n'est pas très résolu, il abandonne lorsqu'il s'aperçoit qu'il ne peut faire démarrer le véhicule (coupure de 401A) et qu'il doit forcer le capot pour vérifier l'origine de cette panne. S'il est résolu, et s'il force le capot et remplace la batterie 401, le blocage de l'arrivée de carburant après un court parcours, conjugué à une fausse indication de niveau de carburant lui fait aussitôt abandonner, en pleine circulation, le véhicule, qui est vite repéré. La personnalisation en est également très simple (choix personnel des liaisons à couper, emplacement des modules récepteurs ...). On obtient ainsi une "serrure" répartie en plusieurs sites. La multiplicité de ces sites et leur personnalisation retardent longuement ou empêchent le démarrage non autorisé du véhicule, et découragent la plupart des voleurs.

## Revendications

**1.** Dispositif antivol pour voiture automobile, caractérisé par le fait qu'il comporte un moyen de production de code confidentiel (14, 15) comprenant un dispositif d'émission (16) et plusieurs modules récepteurs actifs (19, 20) disposés par l'utilisateur en un endroit déterminé arbitrairement par lui-même, le moyen de production de code et chaque module étant reliés au réseau électrique existant de la voiture (2), chaque module comportant des moyens (29 à 32) permettant de reconnaître la validité du code émis par les moyens de production de code et transmis par l'intermédiaire du réseau électrique (2), et des moyens d'action sur un élément essentiel de la voiture.

**2.** Dispositif selon la revendication 1, caractérisé par le fait que les moyens d'action que comprend un des modules actifs sont des moyens de verrouillage de crochets du capot moteur, ces crochets étant accrochés à une zone centrale du capot.

**3.** Dispositif selon la revendication 1 ou 2, caractérisé par le fait que les moyens d'action agissent sur des éléments électriques de la voiture.

**4.** Dispositif selon la revendication 3, caractérisé par le fait que les moyens d'action coupent des liaisons électriques.

**5** Dispositif selon l'une des revendications précédentes, caractérisé par le fait que les moyens de production de code confidentiel comportent une carte (14) et un lecteur de cartes (15) relié par un modulateur (16) au réseau électrique (2).

**6.** Dispositif selon l'une des revendications 1 à 4, caractérisé par le fait que les moyens de production de code confidentiel comportent un clavier (15A) relié par un modulateur (16) au réseau électrique (2).

**7** Dispositif selon l'une des revendications 1 à 4 caractérisé par le fait que les moyens de production de code confidentiel comportent une mémoire programmable reliée à un modulateur, disposés dans un élément (17) muni d'un embout (18) coopérant avec la prise d'allume-cigares (13) de la voiture.

**8.** Dispositif selon l'une des revendications 1 à 7, caractérisé par le fait que les moyens d'action que comprend au moins un des modules actifs sont des moyens de blocage.

**9.** Dispositif selon la revendication 8, caractérisé par le fait que les moyens de blocage agissent sur la colonne de direction ou des éléments qui lui sont reliés et / ou sur les pédales et / ou sur les freins.

**10.** Dispositif selon la revendication 1, caractérisé par le fait qu'il comporte au moins un dispositif de clé électronique (201) comprenant une mémoire reprogrammable (214A), un contact de connexion (201'), un dispositif émetteur-récepteur (212, 213 et 218), un codeur (215), un décodeur (219) et une mémoire temporaire (220), ce dispositif de clé coopérant avec un dispositif réceptacle (202) comprenant un contact de connexion approprié à celui de la clé et relié à un réseau (203) de transmission auquel sont reliés un module maître (205) de supervision et au moins un module satellite actif (206), chaque module comportant au moins une mémoire reprogrammable (255A, 255B), un récepteur et décodeur (250), un codeur et émetteur (252), au moins un comparateur, le module maître comportant en outre des moyens de calcul de nouveau code (229), mémorisé dans toutes les mémoires reprogrammables correspondantes, les modules actifs comportant en outre un dispositif d'actionnement (258).

**11.** Dispositif selon la revendication 10, caractérisé par le fait que les moyens de calcul de nouveau code comportent un oscillateur (244) relié à un compteur (243) lui-même relié à un registre (242), l'entrée d'horloge du registre étant reliée au(x) comparateur(s) et recevant d'eux une impulsion de validation à chaque utilisation de la clé lorsque celle-ci est reconnue bonne.

**12.** Dispositif selon la revendication 10 ou 11, caractérisé par le fait qu'il comporte plusieurs clés électroniques (201A, 201B,...) et que chaque module comporte au moins autant de mémoires reprogrammables (230A, 230B,... et 255A, 255B...) qu'il y a de clés, chaque clé correspondant à une série de mémoires reprogrammables (clé 201A pour les mémoires 230A et 255A, etc...), les codes mémorisés dans les différentes clés étant indépendants les uns des autres et évoluant indépendamment.

**13.** Dispositif selon l'une des revendications 10 à 12, caractérisé par le fait qu'au moins un module satellite (207) comporte des moyens bloquant l'accès à l'endroit où sont déposés les modules satellites et maître tant que l'on n'utilise pas une bonne clé.

**14.** Dispositif selon l'une des revendications 10 à 13, caractérisé par le fait qu'il est appliqué à une voiture automobile.

**15.** Dispositif selon la revendication 14, caractérisé par le fait que le réceptacle est l'allume-cigare de la voiture et que le réseau de transmission est le réseau électrique de la voiture.

**16.** Dispositif selon l'une des revendications 14 ou 15, caractérisé par le fait que les modules sont disposés dans le compartiment moteur.

**17.** Dispositif selon l'une des revendications 14 à 16, caractérisé par le fait que l'un des modules satellites verrouille, à l'arrêt, le capot du compartiment moteur, le dispositif de verrouillage du capot étant fixé à la face intérieure du capot, près de son centre.

**18.** Dispositif selon l'une des revendications 14 à 17, caractérisé par le fait que les dispositifs d'actionnement des modules satellites exercent l'une au moins des actions suivantes en cas d'effraction: coupure de liaison électrique essentielle, blocage d'éléments électriques ou mécaniques essentiels, destruction au moins partielle d'éléments électriques ou mécaniques essentiels, désolidarisation de liaisons mécaniques essentielles.

**19.** Dispositif selon l'une des revendications précédentes, caractérisé par le fait qu'en cas d'effraction, les moyens actifs exercent une action dont l'importance est fonction de la gravité de l'effraction.

**20.** Dispositif selon la revendication 19, caractérisé par le fait qu'en cas d'effraction grave, les moyens actifs détruisent ou bloquent, au moins partiellement, au moins un élément électrique essentiel et/ou un élément mécanique essentiel.

**21.** Dispositif selon la revendication 20, caractérisé par le fait qu'en cas d'effraction grave, les moyens actifs bloquent le moteur.

**22.** Dispositif selon la revendication 21, caractérisé par le fait que le blocage du moteur est réalisé par injection dans son circuit d'arrivée d'air (304) et/ou d'arrivée d'essence (351, 352) d'un fluide différent de son carburant habituel.

**23.** Dispositif selon la revendication 22, caractérisé par le fait que le fluide est l'un au moins des fluides suivants: eau, huile, produit moussant, huile contenant des microbilles, produit expansible.

**24.** Dispositif selon la revendication 19, caractérisé par le fait que le blocage du moteur est réalisé par ouverture d'un réservoir, placé dans le moteur et contenant un produit expansible ou réagissant avec l'huile du moteur.

**25.** Dispositif selon la revendication 22 ou 23, caractérisé par le fait que le fluide est contenu dans un réservoir sous pression (353).

**26.** Dispositif selon la revendication 24 ou 25, caractérisé par le fait que le réservoir est fermé par une électrovanne (357).

**27.** Dispositif selon la revendication 24 ou 25, caractérisé par le fait que le réservoir est fermé par un opercule (361) perçable par un pointeau (370) actionnable par des moyens pyrotechniques (374).

**28.** Dispositif selon la revendication 22, 23 ou 24, caractérisé par le fait que le fluide est contenu dans un réservoir (376) à la pression atmosphérique formant cylindre hydraulique et comportant un piston (381) actionnable par des moyens pyrotechniques (386).

**28.** Dispositif selon la revendication 19, caractérisé par le fait qu'en cas d'effraction simple, les moyens actifs coupent une liaison électrique.

**30.** Dispositif selon la revendication 29, caractérisé par le fait qu'en cas d'effraction simple, les moyens actifs coupent une liaison mécanique facile à réparer.

**31.** Dispositif selon la revendication 30, caractérisé par le fait que la liaison mécanique est le câble ou la tringlerie d'accélérateur et/ou d'embrayage.

**32.** Dispositif selon la revendication 19 ou 20, caractérisé par le fait que l'élément électrique essentiel est l'un au moins des éléments suivants: batterie, alternateur, distributeur d'allumage, bobine d'induction, pompe électrique de carburant, circuit électronique de commande d'injection.

**33.** Dispositif selon la revendication 19 ou 20, caractérisé par le fait que l'élément mécanique essentiel est l'un au moins des éléments suivants: colonne ou tringlerie de direction, courroie de distribution, suspension, pompe mécanique de carburant, radiateur, transmission.

**34.** Dispositif selon l'une des revendications précédentes, caractérisé par le fait qu'il comporte des moyens (431, 433) de blocage du circuit de carburant (428) du véhicule.

**35.** Dispositif selon l'une des revendications précédentes, caractérisé par le fait qu'il comporte un autre module récepteur comprenant des moyens (445, 446) faussant l'indication du niveau du carburant.

**36.** Dispositif selon l'une des revendications 34 ou 35, caractérisé par le fait que les moyens de blocage du circuit de carburant du véhicule comportant une bille (431) disposée dans le plongeur (429) terminant le tuyau (428) d'aspiration de carburant du réservoir (427) de carburant du véhicule, et des moyens de retenue (430) de la bille, commandés par le second module (420, 433).

**37.** Dispositif selon l'une des revendications 35 ou 36, caractérisé par le fait que ledit autre module récepteur comporte des moyens de mémorisation (440) d'informations de débit (428A) et/ou de niveau (434, 435) de carburant du véhicule et des moyens (447) de transmission de ces informations au réseau électrique (402) du véhicule.

**38.** Procédé dissuadant le vol de véhicules, caractérisé par le fait qu'il consiste, aussitôt après avoir détecté une tentative de vol, à couper une liaison électrique ou mécanique essentielle du véhicule, puis à détecter une tentative de recherche de la coupure ainsi provoquée, et à commander, dans l'affirmative le blocage d'arrivée de carburant.

**39.** Procédé selon la revendication 38, caractérisé par le fait que le blocage d'arrivée de carburant est déclenché après un temps de parcours déterminé du véhicule.

**40.** Procédé selon la revendication 38 ou 39, caractérisé par le fait que le blocage d'arrivée de carburant est déclenché lorsque le véhicule est à l'arrêt ou ralentit fortement.

**41.** Procédé selon la revendication 39 ou 40, caractérisé par le fait que le temps de parcours est fonction du régime moteur du véhicule ou de la vitesse du véhicule.

**42.** Procédé selon l'une des revendications 38 à 41, caractérisé par le fait que dans l'affirmative on commande également une indication erronée de niveau de carburant du véhicule.
